Europäisches Patentamt

European Patent Office

Office européen des brevets

(11) Numéro de publication: **0 225 259 B1**

# (12) FASCICULE DE BREVET EUROPEEN

(51) Int. Cl.⁵: **G11B 7/095**, G11B 7/007, G11B 21/08, G11B 21/10

(45) Date de publication de fascicule du brevet:
**24.07.91**

(21) Numéro de dépôt: **86402636.4**

(22) Date de dépôt: **27.11.86**

(54) Support d'information à prégravure et son dispositif d'exploration optiques à accès échantillonné.

(30) Priorité: **27.11.85 FR 8517560**

(43) Date de publication de la demande:
**10.06.87 Bulletin 87/24**

(45) Mention de la délivrance du brevet:
**24.07.91 Bulletin 91/30**

(84) Etats contractants désignés:
**DE GB IT NL SE**

(56) Documents cités:
**EP-A- 0 089 263**
**EP-A- 0 121 145**
**FR-A- 2 336 768**
**FR-A- 2 396 379**

(73) Titulaire: **ALCATEL THOMSON GIGADISC**
**15 rue de la Baume**
**F-75008 Paris(FR)**

(72) Inventeur: **Collomby, Michel**
**Chemin de Garoffes Saubens**
**F-31600 Muret(FR)**
Inventeur: **Bec, Daniel**
**32 rue de Gascogne Villeneuve Tolosane**
**F-31270 Cugnaux(FR)**
Inventeur: **Gerard, Jean-Louis**
**Résidence La Goellette 52 rue Romain Roland**
**F-31520 Ramonville St Agne(FR)**

(74) Mandataire: **Weinmiller, Jürgen et al**
**Lennéstrasse 9 Postfach 24**
**W-8133 Feldafing(DE)**

## Description

La présente invention se rapporte aux mémoires optiques permettant d'accéder à des plages réservées au stockage de l'information et ayant fait l'objet d'un aménagement de la surface de référence d'un disque. Le stockage de l'information est effectué au moyen d'un dispositif lecteur enregistreur qui comporte essentiellement des moyens moteurs de mise en rotation du disque et une tête optique mobile radialement qui projette dans la surface de référence une tache lumineuse finement focalisée par un objectif. Pour matérialiser dans la surface de référence les régions destinées à recueillir l'information, on met en oeuvre une prégravure du disque. Ces régions sont situées sur une piste en spirale ou sur des éléments de piste circulaires concentriques. Les tâches essentielles de la tête optique sont la lecture de la prégravure, l'écriture des données, la lecture des données et le cas échéant l'effacement de celles-ci. Pour remplir ces différentes tâches, lorsque l'information est très dense sur le disque, il est nécessaire de prévoir des asservissements de focalisation et de suivi de piste. L'exploration de la piste nécessite également que l'on prévoie des mesures de synchronisation, car chaque élément d'information est assigné à occuper des sites élémentaires disposés en série le long de la piste et auxquels on se réfère grâce à des motifs de synchronisation situés sur des rayons spécifiques à répartition angulaire uniforme.

Sachant que le disque comporte une structure optiquement enregistrable par modification irréversible ou réversible de ses caractéristiques optiques, il est prudent que l'écriture des données ne puisse se produire dans certaines parties de la surface de référence dont l'exploration périodique assure complètement les fonctions de synchronisation, de suivi de piste et de focalisation. Les plages réservées à l'écriture des données sont alors vierges de toute prégravure ou munies à la rigueur d'un sillon prégravé qui ne joue pas de rôle dans le pilotage du faisceau de rayonnement projeté par la tête optique. Un disque préformaté selon ce principe est généralement lu par un dispositif d'enregistrement lecture qui prélève des échantillons dans le signal électrique de lecture chaque fois que la tache lumineuse interagit avec des motifs prégravés intercalés entre les blocs de données.

Pour gérer le positionnement radial de la tête optique,c'est à dire amener la tache d'exploration à suivre un élément de piste donné dans un ensemble comportant plusieurs dizaines de milliers d'éléments, on donne à chaque élément une identité sous la forme d'une adresse numérique.

Cette disposition qui est exploitée en fin d'accès pour contrôler l'exactitude du positionnement, ne peut se suffir à elle-même, car elle consomme beaucoup de temps. On prévoit généralement une autre disposition qui consiste à contrôler l'avance de la tête de lecture en mesurant son déplacement radial depuis la position de départ jusqu'à ce qu'on soit à même de lire les adresses proches du point de destination.

Pour effectuer la mesure d'un déplacment, il est connu d'utiliser un organe de déplacement de la tête optique tel qu'une vis dont la rotation continue ou pas à pas permet de connaître l'amplitude et le signe de déplacement. Il est également connu d'associer à un moteur de déplacement, un système de mesure tel qu'une règle optique qui détermine le déplacement propre de la tête optique. Ces organes ont pour inconvénients la lenteur et/ou la complexité, mais ils sont de toute façon défectueux puisqu'ils ne fournissent pas la mesure du déplacement de la tache de lecture par rapport à la prégravure. On sait en effet que la prégravure peut présenter une excentricité par rapport à l'axe de rotation du disque, d'où il résulte que même lorsque la tache de lecture est fixe dans l'espace, elle traverse périodiquement plusieurs dizaines d'éléments de piste.

Pour pallier ces inconvénients, il est également connu d'utiliser une technique de comptage des traversées de piste, mais cette technique présuppose que la piste est continue et que les signaux utilisés pour le comptage proviennent de moyens photodétecteurs aptes à produire des signaux détectés en quadrature. Le comptage des traversées d'une piste continue implique la présence d'un sillon prégravé dans les plages où sont emmagasinées les données et conduit à adopter pour les autres plages une variante de prégravure relativement difficile à mettre en oeuvre.

L'expérience montre que la technique d'échantillonnage assure correctement le suivi d'une piste bien que celle-ci ne soit matérialisée que par quelques motifs de prégravure regroupés entre les blocs de données. Un tel disque utilisant cette technique est notamment décrit dans la demande EP-A-89263. Ainsi, un disque est exploré de la même façon, qu'il comporte des informations écrites ou non, ce qui facilite considérablement le choix des couches aptes au stockage des données puisque le contraste d'écriture n'a pas d'incidence sur celui des motifs de prégravure.

L'expérience montre que la technique d'échantillonnage permet d'aborder le comptage des traversées de piste même lorsque celles-ci interviennent entre deux prélèvements de signaux détectés. De plus le comptage des traversées de piste qui consiste à déduire une adresse d'une autre adresse à partir de l'indication d'un compteur peut être remplacé par des indications d'adresse lues au vol qui situent d'autant mieux la tache d'exploration dans le plan mémoire que les traversées de piste sont moins fréquentes par rapport à la fréquence de prélèvement des échantillons marquant la trajectoire. L'aptitude à disposer d'une connaissance précise de la position de la tache d'exploration par rapport à la structure de prégravure résulte notamment du fait que la vitesse de traversée évolue assez lentement pour permettre une bonne analyse de l'accès radial. Ceci est particulièrement vrai au début et à la fin d'un accès où les vitesses sont réduites.

La présente invention a pour objet un support d'information en forme de disque comportant dans une surface de référence un ensemble d'éléments de piste adjacents dont les axes respectifs incurvés sont matérialisés par des motifs de prégravure qui alternent le long desdits axes avec des plages réservées à l'emmagasinage de ladite information ; lesdits axes incurvés ayant un centre de rotation commun d'où sont issus des rayons porteurs desdits motifs ; une première famille de N rayons à répartition équiangulaire définissant avec chacun desdits axes des sites d'intersection occupés par des motifs de synchronisation, caractérisé en ce qu'il comprend au moins une autre famille de rayons obtenue par un décalage angulaire prédéterminé de P rayons appartenant à ladite première famille et munie selon ses P rayons d'une graduation ; ladite graduation étant constituée par un agencement radial de motifs spécifiques dont les interaction optiques répétées avec une tache de lecture focalisée explorant ladite surface de référence permettent, au cours des traversées de piste, de détecter l'ampleur et le signe d'un déplacement radial de ladite tache dans l'étendue dudit ensemble ; ledit agencement radial produisant lorsqu'il est rencontré par la tache de lecture un marquage défini de sa position instantanée vis à vis de ladite graduation. De préférence, les rayons de la deuxième famille issus de la première famille sont équiangulaires et les deux familles ont le même nombre de rayons.

L'invention a également pour objet un dispositif d'exploration optique à accès échantillonné destiné à la mise en oeuvre d'un support d'information tel que mentionné ci-dessus, ledit dispositif comprenant une tête optique projetant dans la surface de référence une tache d'exploration focalisée qui peut se déplacer selon une trajectoire traversant lesdits éléments de piste sous la commande d'un moteur d'accès ; ladite tête optique étant associée à des moyens photodétecteurs recueillant une fraction du rayonnement qui émerge de la portion de surface éclairée par ladite tache ; ledit dispositif comprenant des moyens de commande dudit moteur d'accès recevant l'adresse de destination de l'accès à effectuer et les signaux électriques délivrés par lesdits moyens photodétecteurs, caractérisé en ce que lesdits moyens de commande comprennent des moyens d'échantillonnage prélevant à chaque rencontre de ladite tache avec les rayons munis de ladite graduation au moins une valeur numérique qui sert à situer radialement ladite tache lorsque son mouvement s'étend au chevauchement successif de plusieurs éléments de piste ; ladite valeur numérique représentant au moins le reste de la division d'une grandeur absolue caractéristique de la position radiale de ladite tache par un nombre caractéristique de ladite graduation.

L'invention a encore pour objet un procédé d'accès en mode échantillonné a une piste d'un support d'information telle que décrite ci-dessus, caractérisé par les étapes suivantes :

- balayage par une tache lumineuse de lecture focalisée de la surface de référence dans une direction transversale aux pistes ;
- détermination de l'amplitude et du signe du déplacement radial de la tache à l'intérieur d'un ensemble d'éléments de piste adjacente lorsque la tache interagit optiquement et de manière répétée avec l'échelle de graduation, et
- détermination de la position instantannée de la tache par rapport à l'échelle de graduation lorsque la tache balaye l'agencement radiale, lesdites déterminations étant utilisées pour calculer la position de la tache afin d'accéder à une piste donnée.

L'invention sera mieux comprise au moyen de la description ci-après et des figures annexées parmi lesquelles :

La figure 1 est une vue isométrique partielle d'un dispositif d'exploration optique d'un support d'information.

La figure 2 est un diagramme explicatif.

La figure 3 représente un signal électrique de lecture au cours d'une exploration avec traversées de piste.

La figure 4 illustre une technique de comptage-décomptage basée sur la traversée d'éléments de piste continus.

La figure 5 est une vue isométrique partielle d'un disque utilisant des motifs de prégravure adaptés à la réalisation d'un accès échantillonné.

La figure 6 illustre une première variante de prégravure conforme à l'invention.

La figure 7 est un schéma de dispositif d'exploration optique d'un disque selon l'invention.

La figure 8 représente la fonction $\Phi(t)$ donnant la position absolue de la tache en fonction du temps.

La figure 9 décrit le fonctionnement d'un dispositif d'exploration optique basé sur l'accès échantillonné.

La figure 10 est un organigramme permettant le traitement des échantillons prélevés au cours d'un assès.

La figure 11 décrit le fonctionnement d'un dispositif d'exploration optique basé sur l'accès par paquets d'éléments de piste.

La figure 12 décrit un mode d'adressage absolu et son exploitation lors d'un accès échantillonné.

La figure 13 représente le schéma d'un circuit de décodage.

La figure 14 décrit une variante de réalisation des motifs de prégravure selon l'invention.

La figure 15 est un diagramme explicatif se rapportant à la figure 14.

La figure 16 est un schéma permettant la saisie d'échantillons numériques issus de motifs codés en position ou en longueur.

La figure 17 est un exemple de réalisation d'une prégravure réalisée par groupes de paquets d'éléments de piste.

La figure 18 est une variante de réalisation de la prégravure illustrée à la figure 17.

Les figures 19 et 20 représentent d'autres exemples de prégravure selon l'invention.

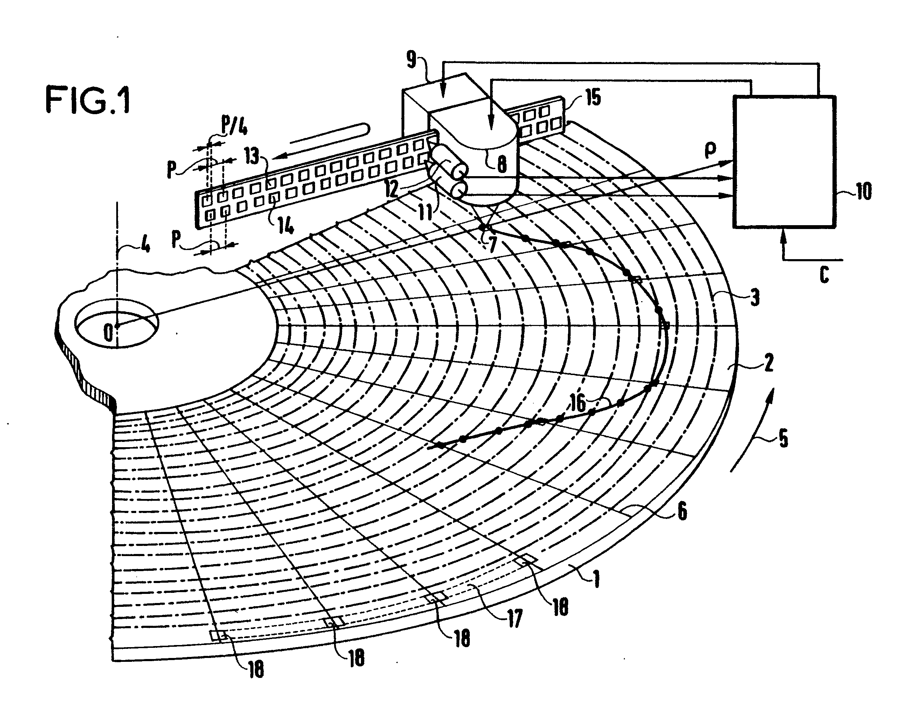

Sur la figure 1, on peut voir un disque optique 1 dont la surface de référence 2 a fait l'objet d'une double subdivision radiale et angulaire. La subdivision radiale est réalisée en inscrivant dans une plage annulaire une piste composée d'éléments circulaires concentriques ou de spires successives d'une courbe en spirale. Cette première configuration de découpage de la plage annulaire est illustrée sur la figure 1 par des portions d'axes en trait mixte 3 tracées dans la surface de référence 2. Ce premier réseau de lignes incurvées a un centre commun 0 qui, idéalement, doit être situé sur l'axe de rotation 4 d'une broche d'entrainement en rotation du disque 1, laquelle n'est pas représentée sur la figure 1. La rotation du disque 1 a lieu, par exemple, dans le sens de la flèche 5 à vitesse uniforme. Une seconde configuration de découpage de la plage annulaire est constituée par un ensemble de N rayons équiangulaires 6 représentés en trait plein sur la figure. Ainsi le disque 1 présente l'aspect d'un plan mémoire compartimenté en N secteurs avec dans chacun d'eux un grand nombre d'emplacements incurvés qui servent au stockage de l'information lorsqu'ils sont explorés de façon centrée avec une tache lumineuse 7. La tache lumineuse 7 est produite par une tête optique 8 qui est mobile, par exemple, parallèlement au rayon $\rho$. On pourrait également déplacer la tête optique selon un arc de cercle coupant la piste, mais pour simplifier l'exposé, on a supposé que la tête optique 8 se déplace radialement sous la commande d'un moteur linéaire d'accès 9.

Chaque segment incurvé 3 du disque est accessible en désignant le secteur angulaire qui le contient et le numéro d'ordre C qui lui a été attribué dans ce secteur. Ce numéro d'ordre est le même pour tous les segments incurvés d'une même spire et change d'une unité lorsque l'on passe d'une spire à la suivante par franchissement d'un rayon particulier. Pour amener la tache d'exploration 7 à explorer la spire d'adresse C, le moteur 9 est commandé par un circuit 10 qui gère cet accès. L'accès débute lorsque la tache d'exploration 7 est quelque part sur le disque et il se termine en principe lorsque la tache a rejoint l'adresse de destination C. Généralement la tête optique cesse de se déplacer avant que la tache 7 soit centrée sur l'élément de piste désiré, car cette tache est soumise à des microdéplacements obtenus grâce à un moteur de déplacement fin qui agit, par exemple à l'intérieur de la tête optique 8, sur un déflecteur de faisceau.

Dans ce cas, le mouvement radial de la tête optique représente la phase grossière de l'accès que l'on doit s'efforcer de rendre aussi précise que possible afin de réduire la durée de fontionnement de l'accès fin destiné à parachever le positionnement de la tache d'exploration 7.

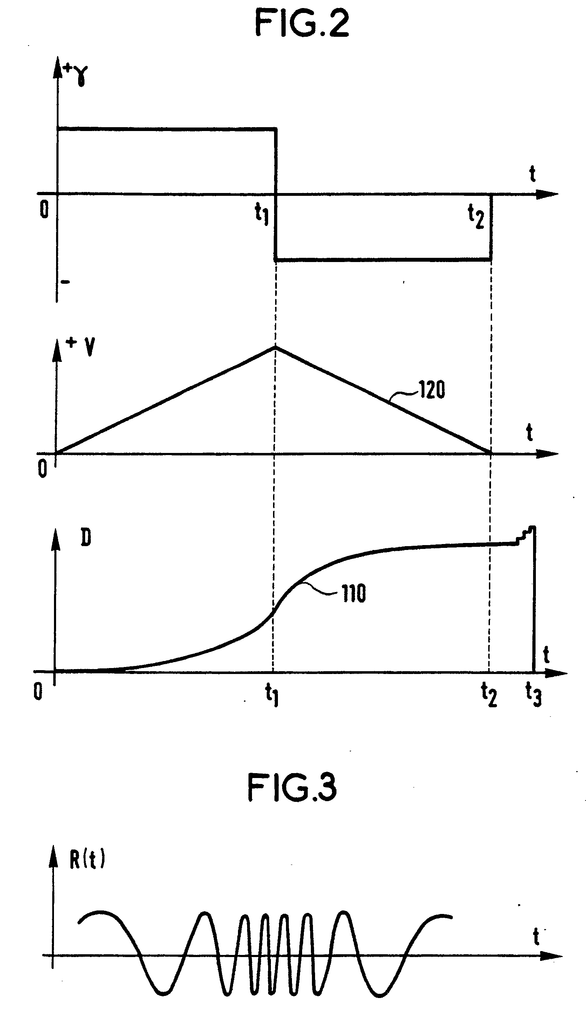

En se reportant à la figure 2, on a représenté par une courbe 110 le déplacement radial D de la tache d'exploration 7 entre les instants O et $t_3$. La partie de cette courbe comprise entre les instants $t_2$ et $t_3$ représente l'approche fine qui met en oeuvre des petits déplacements en marche d'escalier produits par le déflecteur optique contenu dans la tête optique 8. La partie de cette courbe qui s'étend de O à $t_2$ représente l'accès grossier. On voit également sur la figure 2 que pour obtenir la loi de déplacement illustrée par la courbe 110, on a prévu de faire varier la vitesse radiale V de la tête optique selon le gabarit 120 et que pour obtenir ce gabarit on a appliqué au moyen du moteur 9 une accélération $\gamma$ constante de 0 à $t_1$ et qui a simplement changé de signe de $t_1$ à $t_2$. Le déplacement D illustré à la figure 2 est le déplacement absolu de la tache d'exploration 7 obtenu lorsque le déflecteur optique contenu dans la tête optique est bloqué.

Le circuit de commande 10 ne peut assurer un déplacement précis en jouant seulement sur les efforts d'accélération et de freinage, car un fonctionnement balistique serait à la merci des frottements et des causes parasites de déplacement. Il est donc avantageux de prévoir un dispositif de mesure du déplacement de la tête optique qui rétroagit sur la commande du moteur d'accès. Sur la figure 1, cette mesure est obtenue au moyen de senseurs optiques 11 et 12 qui détectent les graduations 13 et 14 d'une règle optique 15. Les signaux électriques délivrés par les senseurs 11 et 12 sont exploités à l'intérieur du circuit 10, afin de produire un signal représentatif de l'amplitude et du signe du déplacement de la tête optique 8. De tels circuits sont bien connus, mais présentent deux inconvénients importants. Les graduations 13 et 14 présentent un pas p et sont décalées du quart de ce pas pour mettre en évidence le signe du déplacement. Or, les éléments de piste sur le disque présentent un écartement différent et qui ne peut pas rester en relation précise avec le pas de la règle. L'autre inconvénient est que l'excentricité du disque crée un déplacement relatif entre la règle et le réseau d'éléments de piste.

Pour pallier ces inconvénients, on a songé à utiliser l'interaction de la tache d'exploration avec des sillons continus portés par le disque 1 pour définir par comptage-décomptage le nombre de franchissements de sillons occasionnés par le déplacement radial de la tache d'exploration.

Plus précisément, un accès radial décrit, lorsque le disque tourne, une trajectoire 16 qui recoupe les axes 3 de la gravure portée par la surface de référence 2. Ces recoupements ont lieu aux emplacements qui sur la figure 1 ont été munis d'une marque ronde.

En supposant que la tête optique analyse le rayonnement qui émerge de la partie éclairée 7 de la surface de référence 2 avec une cellule photoélectrique située sur l'axe optique de l'objectif qui focalise la tache 7 sur le disque, on obtient un signal électrique R(t) tel que représenté à la figure 3. Si le sillon parait optiquement plus clair que l'interpiste, les maxima du signal R(t) représentent les instants de traversée des sillons qui sont d'autant plus rapprochés que la vitesse de déplacement de la tache est élevée. Cependant, le signal R(t) n'est pas suffisant pour distinguer une traversée de piste vers la périphérie du disque d'une autre ayant lieu vers le centre.

Un dispositif d'accès automatique à l'information emmagasinée selon des sillons continus a été décrit dans une demande de brevet déposée en France le 1er Juillet 1977 au nom de THOMSON-BRANDT et sous le N° 77 20 373 et publiée sous le N° FR-A-2 396 379.

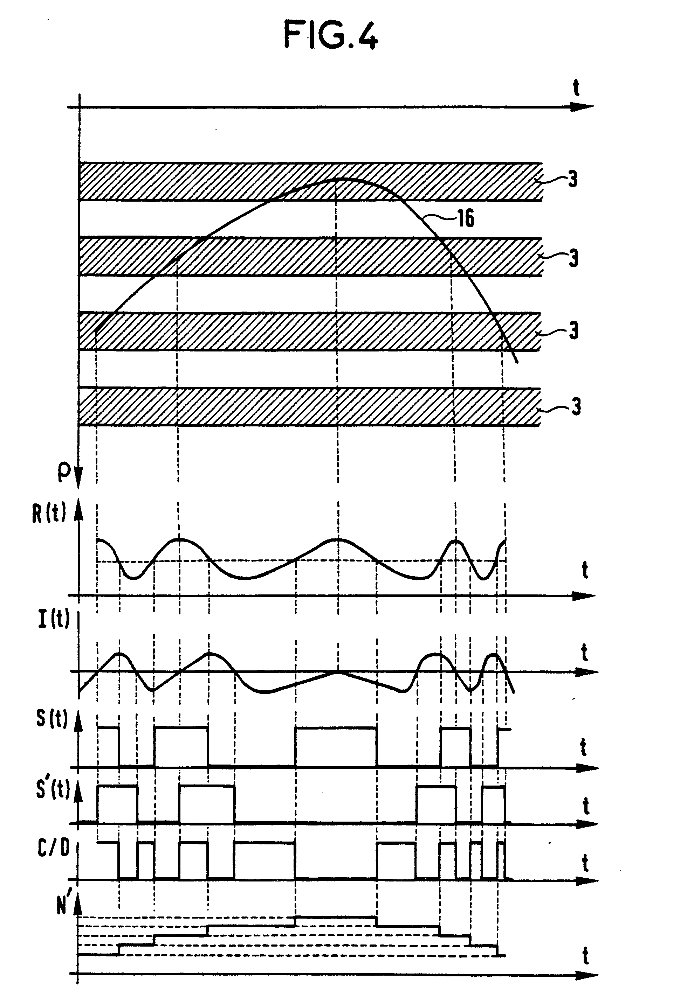

L'essentiel du fonctionnement de ce dispositif est rappelé sur la figure 4 qui montre dans la partie supérieure et rapporté à un système d'axes (ρ,t) une portion de disque avec quatre sillons 3 équidistants et une trajectoire 16 de la tache d'exploration 7. L'axe ρ représente la direction radiale centrifuge et l'axe t représente la direction tangentielle ou le temps écoulé, car ces deux variables sont liées l'une à l'autre par la vitesse d'exploration tangentielle.

Le diagramme R(t) a la même signification qu'à la figure 3, mais comme il va s'agir de définir aussi le sens des traversées de sillons, on dispose d'un signal électrique supplémentaire I(t). Pour produire le signal I(t), la tête optique 8 comporte un second système photodétecteur à deux cellules contigues ayant leur ligne de séparation située sur l'axe optique de l'objectif. Ces cellules sont reliées aux entrées complémentaires d'un amplificateur différentiel qui délivre le signal I(t). Un circuit détecteur à seuil transforme le signal R(t) en une forme d'onde rectangulaire S(t) tandis qu'un autre circuit détecteur à seuil commuté au passage par zéro fournit la forme d'onde rectangulaire S'(t) à partir du signal I(t). Un circuit compteur-décompteur reçoit sur une entrée d' horloge des impulsions correspondant à chaque transition du signal S(t), mais l'incrémentation et la décrémentation sont déterminées par un signal auxiliaire C/D dont les états logiques sont ceux d'une porte logique "OU EXCLUSIF" qui reçoit sur ses deux entrées les signaux S(t) et S'(t). L'indication N'du compteur-décompteur évolue comme illustré au bas de la figure 4 et on voit qu'elle reproduit fidèlement l'évolution définie par la trajectoire 16. Ce dispositif comporte de plus des moyens pour l'actualisation du compteur à prévoir à chaque tour dans le cas d'une piste en forme de spirale. Dans ce cas, la forme de la piste est prise en compte par une augmentation, à une fréquence double de la fréquence de rotation du disque, de la valeur algébrique du contenu du compteur-décompteur.

En revenant au compartimentage du disque tel qu'il est illustré à la figure 1, on peut introduire la technique d'échantillonnage et le motif de prégravure auquel elle se réfère en imaginant que la surface de référence 2 est une surface lisse qui réfléchit la lumière de façon uniforme, comme décrit dans la demande EP-A-89 263. On peut alors imaginer que la piste est suffisamment matérialisée par la présence au voisinage immédiat des rayons 6 de groupes de motifs prégravés qui sont seuls à interagir avec la tache d'exploration 7.

En admettant que l'accès soit géré à partir de la prégravure du disque essentiellement présente le long des rayons 6, la connaissance de la trajectoire 16 par le dispositif d'accès sera limitée aux points de rencontre de celle-ci avec les rayons 6. Ces points de rencontre qui sont pointés sur la figure 1 par des carrés tombent le plus souvent entre les axes 3. En outre, entre deux de ces points successifs la tache peut avoir traversé des éléments de piste sans que leur présence soit révélée. Le concept de lecture échantillonnée d'un support d'information ne nécessite pas la présence d'un sillon ou la reconnaissance des segments réservés à l'écriture des données. Il est donc tout à fait concevable qu'avant toute écriture, le disque vierge ne porte que des motifs de prégravure, mais dans tous les cas, la gestion d'un accès par échantillonnage doit pouvoir se passer de l'usage des interactions optiques avec les données utiles à mémoriser et les sillons continus éventuels qui leurs sont sousjacents.

La mise en oeuvre d'un processus d'accès échantillonné selon la présente invention suppose que l'on ait obtenu avec assez de précision le synchronisme entre un signal d'horloge et la rencontre périodique d'une première famille de N rayons équiangulaires. Ce synchronisme est obtenu de façon connue au moyen de drapeaux de synchronisation appartenant à la prégravure du disque.

La focalisation du rayonnement optique dans la surface de référence du disque est également acquise par des moyens connus qu'il est superflu de décrire.

Compte tenu du caractère fugace des prélèvements effectués selon les P rayons d'une sous famille affecté à la gestion de l'accès échantillonné, il est nécessaire que les signaux électriques photodétectés soient significatifs quelle que soit la position de rencontre de la tache d'exploration avec les rayons de cette sous famille. Pratiquement, cette condition implique que les motifs spécifiques affectés à l'accès échantillonné interagissent avec la tache d'exploration pour engendrer un signal détecté dont la valeur est définie, c'est à dire distincte de celle obtenue lorsque la tache d'exploration rencontre une portion entièrement lisse de la surface de référence. Il est clair que lorsqu'un motif dépasse en étendue celle de la tache d'exploration, seule l'interaction marginale peut établir cette distinction, à moins que le contraste du motif par rapport à son entourage soit dû à une autre cause que l'altération de la surface d'onde du rayonnement à détecter. Un espace intermotif anormalement grand pourrait fournir une valeur indéfinie de la position instantanée de la tache d'exploration.

Dans le cadre de l'accès échantillonné, il y a lieu de prévoir dans la surface de référence du disque des moyens de graduation radiale en relation avec l'agencement des axes 3 et leurs éléments peuvent occuper un groupe de rayons échantillonnés successivement. Ceci constitue un avantage de la méthode, puisque dans le cas de la solution à sillons continus on ne peut se fonder que sur une loi de graduation unique et très rudimentaire.

En ce qui concerne la notion de graduation, on peut envisager deux niveaux d'intégration. Le niveau le plus élémentaire consiste à reproduire le long d'un rayon du disque une loi périodique et à lui adjoindre le long d'un rayon très voisin, une loi périodique de même espèce, mais décalée en quadrature pour donner une indication de sens de déplacement le long de cette double graduation. Une seule loi peut suffire si la seconde loi est dérivée par des moyens photodétecteurs qui interprètent de façon différentielle le rayonnement à détecter. Le fait de choisir des rayons voisins pour échantillonner les fonctions en quadrature vient du fait que lorsque la trajectoire ne coupe pas à angle droit ces rayons il s'introduit un léger décalage radial qui tend à fausser la relation de quadrature.

Un niveau plus évolué de graduation consiste à prévoir une loi non périodique assignant une valeur absolue à chaque position le long du rayon. Dans ce cas, cette loi s'exprime par une adresse codée qui prend plus de place mais qui peut être lue moins fréquemment lors de l'exploration d'une spire. Ces deux niveaux d'intégration peuvent coexister comme on le verra dans la suite de la description.

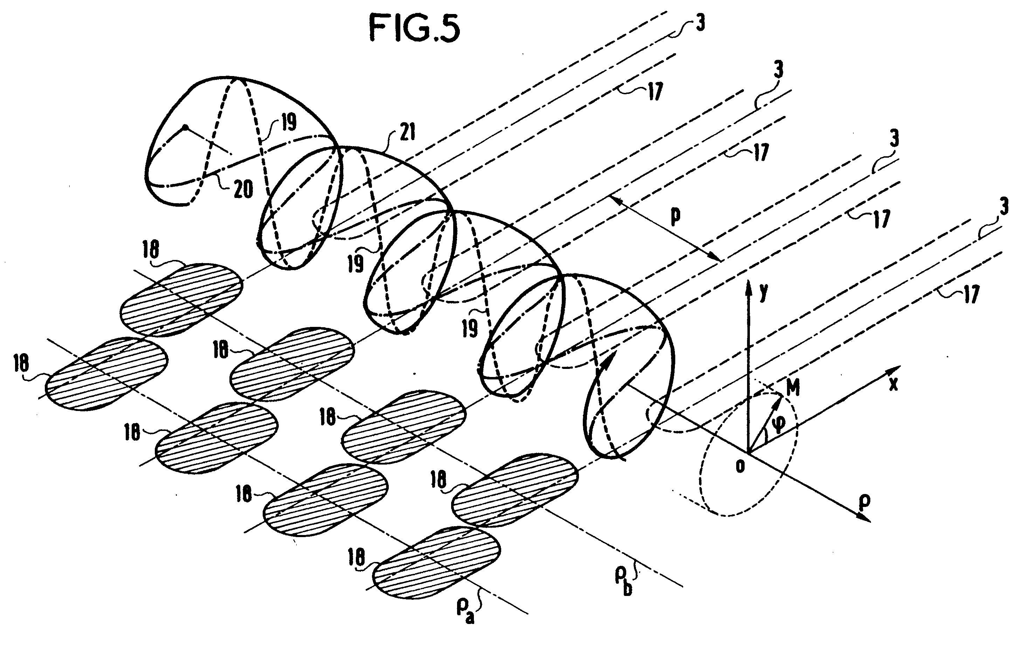

Sur la figure 5, on a représenté une vue isométrique d'un fragment de la surface de référence 2 du disque de la figure 1 rapportée à un système d'axes x, y, $\rho$. Le rayon $\rho$ et l'axe x définissent la surface de référence tandis que l'axe y est parallèle à l'axe de rotation 4 du disque. Des plages de données 17 sont dessinées avec un contour en pointillé centré sur les axes 3 de plusieurs éléments de piste adjacents. Ces plages 17 qui s'étendent à partir du rayon $\rho$ dans la direction x d'exploration sont précédées par des motifs de prégravure 18 qui forment deux alignements radiaux suivant les rayons d'échantillonnage $\rho_a$ et $\rho_b$. L'agencement radial des motifs 18 centrés sur le rayon $\rho_a$ est tel que son analyse par la tache d'exploration 7 engendre un signal électrique de lecture ayant l'allure de la cosinusoïde 19 tracée dans le plan (y,$\rho$). L'agencement radial similaire mais décalé en quadrature des motifs 18 centrés sur le rayon $\rho_b$ est tel que son analyse par la tache d'exploration 7 engendre un signal électrique de lecture ayant l'allure de la sinusoïde 20 tracée dans le plan (x,$\rho$). Ces deux fonctions circulaires 19 et 20 peuvent représenter les composantes d'un vecteur ayant pour projection OM dans le plan (x,y). Ce vecteur représente de façon exhaustive la progression de la tache d'exploration le long du rayon $\rho$ et décrit par son extrémité une hélice 21 qui symbolise une graduation comparable à celle donnée par la rotation d'une vis. Cette illustration des possibilités offertes par les motifs 18 de transcrire le déplacement de la tache en rotations du vecteur OM met bien en évidence le fait que la connaissance de l'angle $\phi$ du vecteur OM défini sur l'intervalle 0 - 360° ne fournit pas une indication absolue de position $\Phi$ dont $\phi$ ne serait que la partie fractionnaire. Les motifs 18 de la figure 5 permettent à coup sûr le comptage-décomptage des pistes à condition d'effectuer des prélèvements de signal à des intervalles de temps suffisamment proches pour restituer la continuité de l'avance. L'avantage de la configuration illustrée sur la figure 5 est d'occuper peu de place le long des éléments de piste puisqu'il suffit d'effectuer deux échantillonnages de proche en proche pour acquérir l'information relative aux traversées de piste. L'inconvénient de cette solution est la mise en oeuvre d'un processus de lever de doute, car entre deux prélèvements successifs, la vitesse de translation radiale peut être telle que la variation de $\Phi$ corresponde à plus d'un tour du vecteur représentatif OM.

Un avantage particulier de la solution illustrée à la figure 5 est que les motifs 18 peuvent être utilisés pour réaliser un accès échantillonné, mais aussi pour assurer le suivi d'un élément de piste. Comme le montre la figure 5, les motifs 18 centrés sur le rayon $\rho_a$ présentent un déport positif par rapport aux axes 3, tandis que les motifs 18 centrés sur le rayon $\rho_b$ présentent un déport négatif de même amplitude. On voit que si cette disposition est adoptée avec son déport égal au huitième du pas p des éléments de piste, les échantillons prélevés selon les rayons $\rho_a$ et $\rho_b$ sont précisément ceux qui permettent de déterminer l'écart entre le centre de la tache d'exploration 7 et l'axe 3 de l'élément de piste en cours d'exploration.

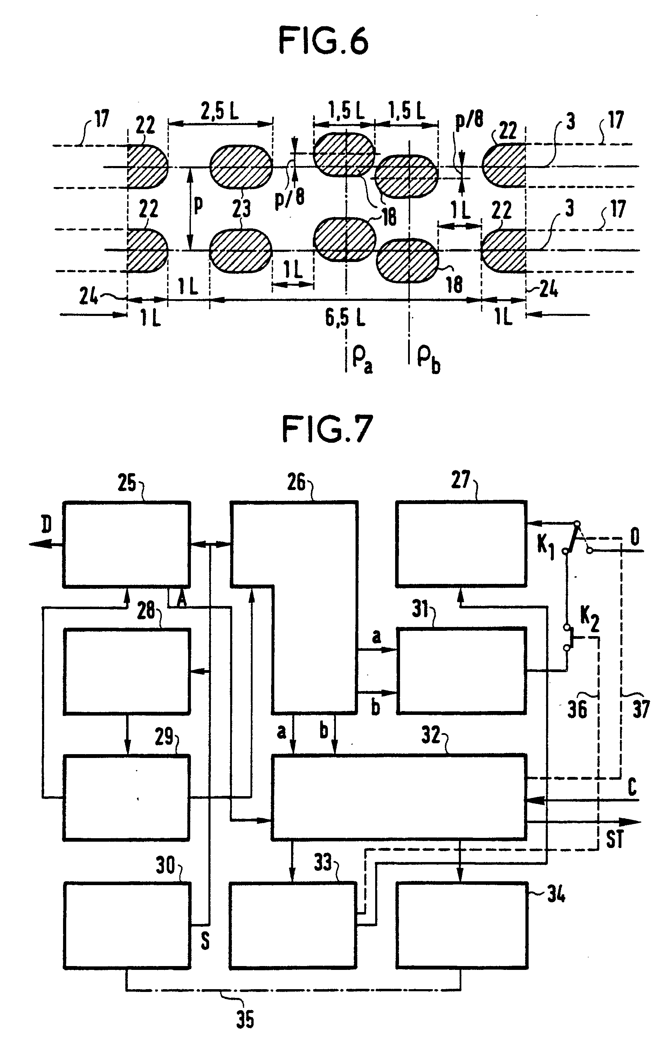

Une configuration de motifs de prégravure adaptée à cette double utilisation des motifs 18 est illustrée à la figure 6.

On y a représenté les axes 3 de deux éléments de piste ainsi que les plages de stockage des données 17. La prégravure est hachurée sur la figure 6 entre les frontières 24 qui encadrent les motifs utilisés pour réaliser par échantillonnage la synchronisation, le suivi de piste et l'accès par comptage-décomptage.

Les motifs 18 sont représentés comme sur la figure 5 avec une longueur mesurée dans la direction d'exploration égale à une fois et demi la longueur L choisie comme unité de transcription. Le motif centré 23 a la même longueur que les motifs 18 et sert, en association avec les motifs terminaux 22, au recalage du rythme d'exploration de la piste. A cet effet, deux distances particulières 2,5 L et 6,5 L sont adoptées, afin que les transitions qui caractérisent l'exploration des motifs 22 et 23 soient identifiées par rapport à toutes les autres transitions que peut contenir le signal de lecture. L'échantillonnage selon les rayons $\rho_a$ et $\rho_b$ est lié à un signal d'horloge dont le recalage dépend de l'exploration convenable des motifs 22 et 23 aussi bien pendant la phase d'accès que pendant la phase suivante où la tache est de nouveau astreinte à suivre l'élément de piste auquel on a accédé.

Le schéma général d'un dispositif d'exploration à accès échantillonné est illustré à la figure 7. Le signal électrique S résultant de l'exploration du disque 1 avec la tache lumineuse 7 est délivré par la tête optique 30 à un circuit identificateur 28 qui reconnaît l'agencement des motifs 22 et 23 et émet un signal de synchronisation de l'horloge 29. Le signal S est également appliqué à un circuit de prélèvement 25 qui sous la commande de l'horloge 29, isole les données D inscrites dans les plages de données 17 ainsi qu'une adresse spécifique A de l'élément de piste en cours d'exploration.

Le signal S alimente aussi un autre circuit de prélèvement 26 également commandé par l'horloge 29, afin de prélever les échantillons a et b qui correspondent aux rencontres avec les rayons $\rho_a$ et $\rho_b$. Ces échantillons se présentent sous une forme numérique à l'entrée d'un circuit de calcul 32 qui gère l'accès et sous une forme analogique à l'entrée d'un circuit comparateur à mémoire 31 qui, de façon connue, détermine l'écart radial de la tache d'exploration 7 par rapport à l'élément de piste 3. Un dispositif déflecteur de tache d'exploration 27 est intégré à la tête optique 30 pour finaliser un accès par des sauts de piste comme illustré à la figure 2. Ces sauts de piste sont commandés par un circuit 33 qui reçoit du calculateur 32 les ordres de saut de piste nécessaires à l'approche finale de la valeur de consigne C injectée dans le calculateur 32. Lorsque la tache d'exploration est venue lire l'élément de piste désigné par la consigne C, le calculateur émet un signal ST indicateur de l'état d'achèvement de la procédure d'accès. En dehors des périodes d'accès, le signal d'écart radial produit par le circuit 31 est transmis par deux commutateurs $K_1$ et $K_2$ au circuit déflecteur 27 de sorte que la tache de lecture 7 est astreinte à suivre la piste. L'ouverture temporaire du commutateur $K_2$ a lieu à chaque saut de piste commandé par le circuit 33 d'où la connexion en pointillé 36 qui relie ces deux organes. Pendant la phase d'accès grossier, le commutateur $K_1$ branche le déflecteur 27 sur une valeur de commande 0 qui le bloque en position neutre. Cette neutralisation est illustrée sur la figure 7 par la connexion en pointillé 37. La phase d'accès grossier est gérée par le circuit calculateur 32 qui reçoit les échantillons numérisés a, b et qui d'après l'adresse A de départ et la consigne C d'arrivée va définir les commandes à appliquer au moteur d'accès 34. Ce dernier réalise par la connexion en trait mixte 35 le déplacement de la tête optique, afin de traverser les éléments de piste qui séparent le point de départ du point d'arrivée. A titre indicatif, on peut considérer qu'un disque de 300mm de diamètre portant une piste en spirale ayant 30.000 spires au pas de 1,6 um et qui tourne à 1 200 tours par minute sera échantillonné à la fréquence de 50 kHz, ce qui représente 2 500 paires de motifs 18 par tour du disque. Donc, avec la disposition de motifs de prégravure illustrés à la figure 6 et en prenant une valeur moyenne de L égale au micron, la place prise sur un tour par la prégravure n'excède pas 23,75 millimètres, ce qui est peu compte tenu de la longueur de la spire.

Maintenant qu'une vue d'ensemble a été donnée concernant un premier mode de réalisation de l'invention, il est nécessaire de préciser davantage le fonctionnement du calculateur 32 en ce qui concerne le traitement des échantillons a et b.

L'illustration de la figure 5 met en évidence qu'il existe en général au cours d'un accès une fonction $\Phi(t)$ qui représente la position absolue d'un mobile en fonction du temps. Cette fonction est synthétisée plus ou moins parfaitement par un nombre limité de motifs de prégravure et elle représente une évolution soumise aux lois de la mécanique comme illustré à la figure 2.

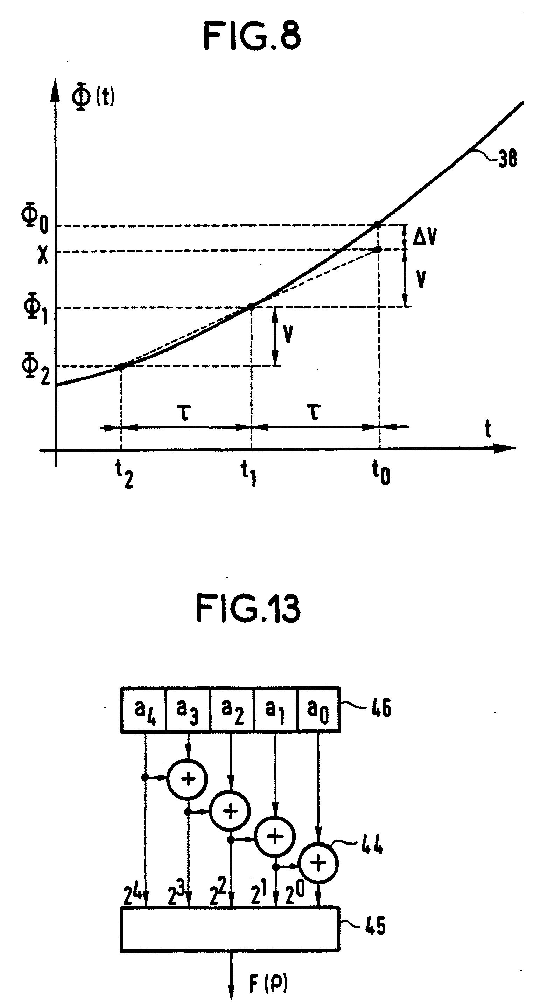

Sur le diagramme de la figure 8, on voit que la loi $\Phi(t)$ représentée par une courbe en trait plein est échantillonnée à des instants $t_2$ $t_1$ et $t_0$, la période $\tau$ pouvant sans inconvénient être choisie comme unité de temps. Cette loi donne la mesure d'un angle lorsqu'on adopte l'interprétation de la figure 5 où la rotation du vecteur OM a été associée au déplacement radial de la tête de lecture. Si $\Phi_2$ et $\Phi_1$, sont les valeurs absolues de la rotation du vecteur aux instants d'échantillonnage $t_2$ et $t_1$ et si la connaissance de ces valeurs a été acquise à partir des conditions initiales de l'accès et par un traitement numérique de proche en proche, on voit que la vitesse V de déplacement entre ces instants est tout simplement exprimée par la différence entre $\Phi_1$ et $\Phi_2$.

A l'instant $t = t_0$ du dernier échantillonnage le problème posé est de déterminer $\Phi_0$ sachant que l'on dispose de $\phi_0 = \text{MOD}[\Phi_0, 2\pi]$. Le symbole MOD représente la fonction modulo qui fournit le reste $\phi_0$ de la division de $\Phi_0$ par $2\pi$. On voit sur la figure 8 que la vitesse à l'instant to est encore

$$V$$

si l'extrapolation linéaire est valable, donc si le mobile n'a pas subi d'accélération $\gamma$, mais comme cette accélération vaut précisément $\gamma = \Delta V$, la valeur à l'instant to est bien $\Phi_0$ et non pas la valeur X extrapolée linéairement.

On a donc à sa disposition les relations suivantes :

$$V = \Phi_1 - \Phi_2 \; ; X = \Phi_1 + V \; ; \Delta V = \Phi_0 - X$$

d'où l'on tire $\Phi_0 = X + \Delta V$
En notant

$$\mathcal{M}(u) = \text{MOD}\left[ u + \pi, 2\pi \right] - \pi$$

et en s'imposant la condition : $-\pi < \Delta V < +\pi$, on voit que :

$$\Delta V = \mathcal{M}(\varphi_0 - X)$$

d'où il découle que :

$$\Phi_0 = X + \mathcal{M}(\varphi_0 - X)$$

Cette relation montre qu'avec l'hypothèse formulée, c'est à dire par validation d'un test et pour des accélérations rencontrées en pratique, on peut aisément actualiser $\Phi_0$ avec l'échantillon $\phi_0$ et l'extrapolation linéaire qui donne la valeur X.

L'étude mathématique qui précède montre qu'un accès échantillonné basé sur la synthèse d'une fonction périodique peut fournir la position absolue d'un mobile en levant l'ambiguité de la fonction modulo grâce à une exploitation de proche en proche des restes de division par $2\pi$.

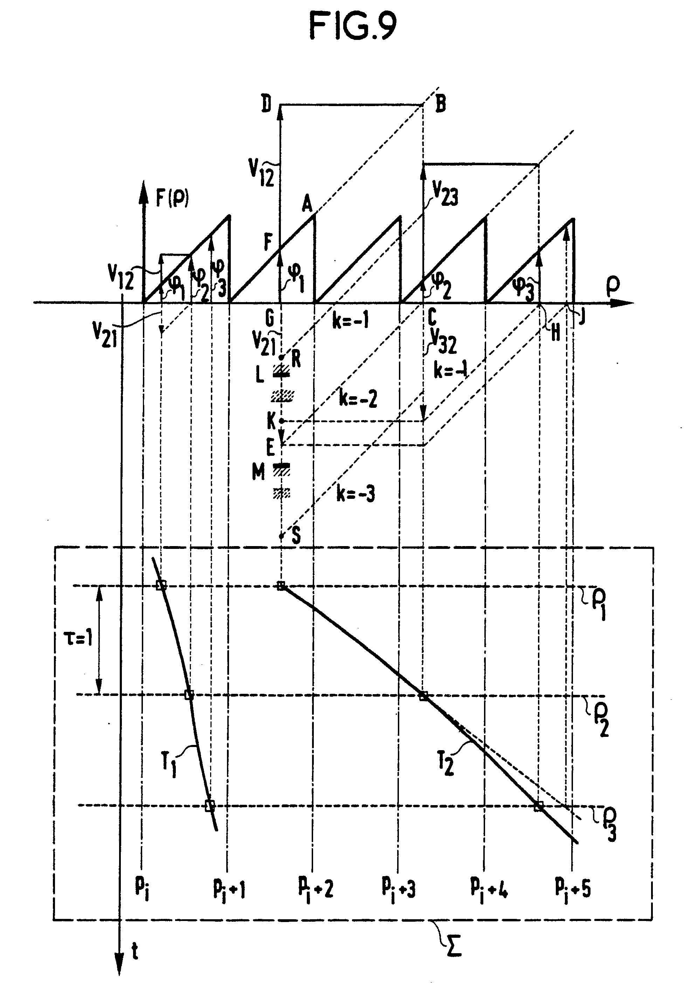

Bien que l'invention ne soit pas limitée à l'exploitation des fonctions radiales à caractère purement périodique et à échantillonage régulier, on a illustré plus concrètement à la figure 9 ce type de fontionnement, en essayant de se rapprocher au mieux de la présentation de la figure 4.

On a supposé en accord avec la figure 5 que grâce à un dimensionnement et un espacement radial approprié, les motifs 18 de la figure 6 génèrent des fonctions circulaires lorsqu'ils sont explorés selon les rayons $\rho_a$ et $\rho_b$ par une tache de lecture de diamètre adapté à la largeur radiale des motifs et aux interstices entre motifs. Une telle variation est aisée à obtenir en pratique avec une précision de quelques pour cents. Un calcul trigonométrique basé sur la fonction arc tg débouche sur une loi échantillonnée du type dent de scie asymétrique.

Sur la figure 9, on a illustré une portion de surface $\Sigma$ dans un système d'axes $(\rho, t)$. Cette portion est partagée par des rayons $\rho_1$, $\rho_2$ et $\rho_3$ selon lesquels sont effectués des échantillonnages d'une fonction en dent de soie $F(\rho)$ dont les valeurs $\phi_1$, $\phi_2$, $\phi_3$ positives sont des échantillons.

La trajectoire $T_1$ illustre un accès à faible vitesse. Lorsqu'elle est parcourue vers la droite, on voit que la vitesse d'exploration $V_{12}$ s'obtient en soustrayant à l'échantillon $\phi_2$ saisi en dernier l'échantillon $\phi_1$ qui précède. Cette soustraction est illustrée sur la figure par une translation horizontale du vecteur $\phi_2$ sur la ligne d'action du vecteur $\phi_1$. Tant que la trajectoire ne coupe aucun axe de piste, il suffit d'appliquer la relation $V_{ij} = \phi_j - \phi_i$. Si la trajectoire est parcourue en sens inverse, l'échantillon le plus récent est $\phi_1$ et la vitesse $V_{21}$ s'obtient en appliquant la relation $V_{ji} = \phi_i - \phi_j$ qui donne un résultat négatif indiquant ainsi que le mouvement est dirigé à gauche. En respectant l'ordonnancement dans le temps des échantillons, ces relations sont équivalentes et seraient applicables même en cas de franchissement de piste si la fonction $F(\rho)$ était une simple droite oblique dans le système d'axe $\rho, F(\rho)$. Le caractère périodique de la fonction $F(\rho)$ rend plus ardu le calcul de la vitesse.

Pour illustrer ce fait, on a représenté une autre trajectoire $T_2$ sur la figure qui, lorsqu'elle est décrite de gauche à droite, entraîne deux franchissements de piste et ensuite un seul franchissement.

On considère à nouveau trois valeurs échantillonnées $\phi_1$, $\phi_2$ et $\phi_3$, mais cette fois elles ne sont plus situées sur la même dent de la fonction $F(\rho)$. La détermination correcte des vitesses $V_{12}$ et $V_{21}$ sera basée sur le prolongement par la ligne pointillée AB de la pente qui contient $\phi_1$. En substituant à l'échantillon $\phi_2$ la valeur correspondante à la mesure de BC, on peut construire graphiquement les vitesses $V_{12}$ ou $V_{21}$ en menant l'horizontale BD et l'oblique CE. Le problème posé est de déterminer BC, connaissant $\phi_2$. Si la fonction $F(\rho)$ a pour domaine de variation l'intervalle $(0, 2\pi)$, on voit que BC est égal à $\phi_2$ augmenté de $2 k\pi$ où $k = +2$ signifie que deux traversées de piste sont intervenues entre l'échantillonnage $\phi_1$ et l'échantillonnage $\phi_2$.

En poursuivant l'examen de la figure 9, on voit que la détermination des vitesses $V_{23}$ et $V_{32}$ à partir des échantillons $\phi_2$ et $\phi_3$ implique une autre valeur de k puisqu'un seul franchissement de piste a eu lieu entre ces deux échantillonnages.

Comme l'accès échantillonné ignore par définition les évènements qui ont pu survenir entre deux échantillonnages, il faut synthétiser une variable k dont les valeurs entières -n, ...-2, -1, 0, 1, 2, ... +n, validées selon un critère approprié, représentent algébriquement les traversées de piste. Le signe de la variable k indique le sens du franchissement de sorte qu'une variable N'de comptage de traversées de piste peut être actualisée à chaque nouvel échantillonnage prélevé au moyen de l'opération : N' = N' + k.

Le critère de validation de la variable k est lié à l'aptitude au changement de la vitesse de description d'une trajectoire sur le disque. Cette aptitude voit son ampleur limitée en pratique par l'accélération que le moteur d'accès est capable de communiquer à la tête optique. L'excentricité qui caractérise la rotation du disque produit une oscillation de trajectoire, mais il ne s'agit que d'un effet secondaire dont on n'a pas tenu compte pour dessiner la trajectoire.

Sur la figure 9, la trajectoire $T_2$ est une ligne brisée illustrant une progression radiale GC de durée $\tau$ distincte de la progression radiale CH de même durée oui la précède ou qui la suit. Pour un déplacement de gauche à droite de la tête optique, on peut dire que celle-ci a subi une décélération $\gamma$ = HJ, J étant la position qui serait atteinte sur le rayon $\rho_3$ si la décélération n'avait pas eu lieu.

A titre d'exemple de réalisation, non limitatif de l'invention, on va supposer que la trajectoire $T_2$ est décrite de droite à gauche et que le critère de validation de la variable k repose sur la comparaison des estimations de la vitesse effectuées avec les valeurs $\phi_3$ et $\phi_2$ et ensuite avec les valeurs $\phi_1$ et $\phi_2$. La figure 9 montre que la détermination de la vitesse $V_{32}$ est fondée sur la connaissance de $\phi_3$ et $\phi_2$, ainsi que sur la valeur k = -1 qui a été validée antérieurement. Pour mettre en relation cette détermination avec celle qui fournit la vitesse $V_{21}$, on a reporté sur la ligne verticale portant le vecteur $V_{21}$ la longueur GK qui traduit la valeur $V_{32}$ antérieurement calculée, c'est à dire $\phi_2 - \phi_3 - 2\pi$.

On a symbolisé autour du point K un intervalle d'encadrement de bornes L et M tel que GL = $V_{32}$ + $\pi$ et GM = $V_{32}$ - $\pi$, $\pi$ étant la demihauteur de la dent de scie $F(\rho)$. L'extrémité E du vecteur vitesse $V_{21}$ déterminée en assignant la valeur -2 à la variable k, tombe dans l'intervalle LM, ce qui constitue son test de validation. Par contre, les valeurs de $V_{21}$ issues de $\phi_2$, $\phi_1$ et du choix d'une autre valeur de k tombent hors de l'intervalle LM. Sur la figure 9, les points R et S obtenus par construction graphique décalée de +-$2\pi$ sont caractéristiques de calculs de vitesses effectués respectivement avec les valeurs k = -1 et k = -3. On voit donc que la non réalisation du test indique qu'il faut modifier la variable k lorsqu'on passe du calcul de $V_{32}$ au calcul de $V_{21}$. L'importance et le sens de la modification de la variable k sont fonction de la trajectoire et du sens du mouvement, mais en partant de la valeur validée précédemment, on peut l'incrémenter unité par unité jusqu'à validation du test. Le choix de l'intervalle $\pm\pi$ fait qu'une seule valeur de k est validable. Ceci dit, l'hypothèse sur laquelle se fonde la bonne détermination de k est la variation modérée de la vitesse. Cet aspect est illustré sur la figure 9 par une modification en pointillé de la trajectoire $T_2$ et par une construction graphique mettant en évidence le recentrage de l'intervalle LM par rapport au point E. Grâce à ce schéma, on voit que KE est l'accélération et qu'elle ne doit pas excéder la valeur $\pi$ pour que la valeur k validée par le test corresponde à la réalité.

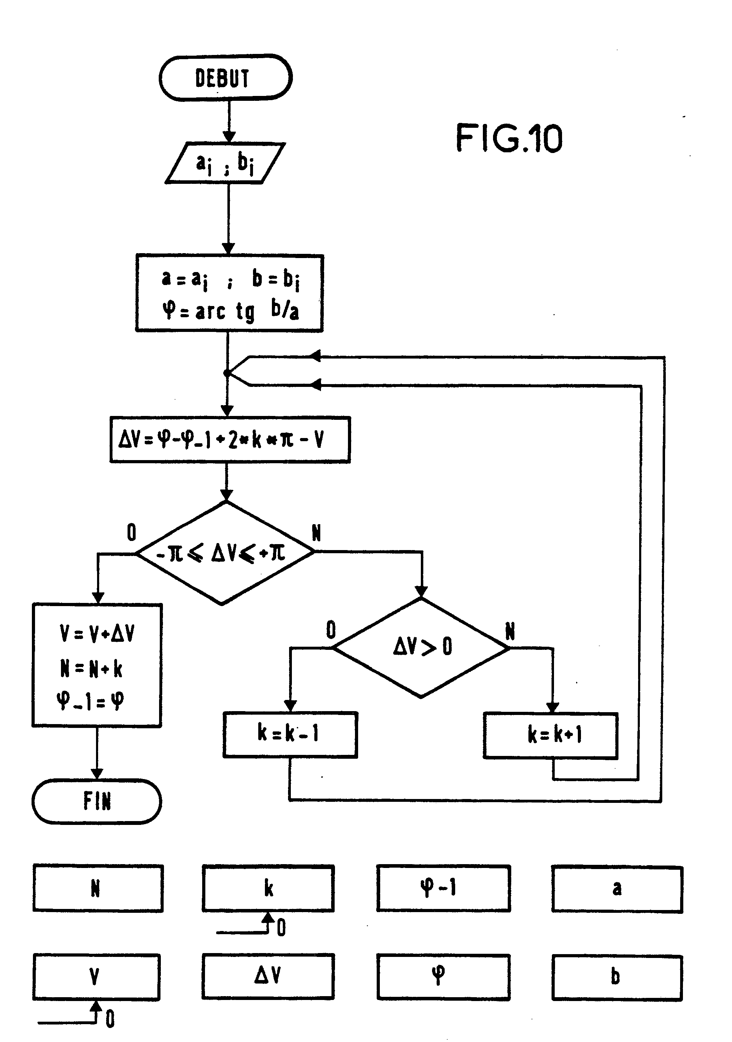

Au vu de ce qui précède, le processus de détermination de la variable k peut être représenté par l'organigramme de la figure 10 dont les variables sont :

- l'indication N' d'un compteur de franchissements de piste,
- la vitesse V,
- le quantum de franchissements : k,
- l'écart de vitesse $\Delta v$,
- les valeurs $a_i$, $b_i$ d'entrée,
- l'angle $\phi$,
- l'angle $\phi_{-1}$ correspondant à l'échantillonnage précédent

Cet organigramme est un module destiné à s'intégrer dans un organigramme plus général, quoique classique, qui sert à gérer un accès à partir d'une consigne C en commandant un ou plusieurs moteurs destinés à faire coïncider la tache de lecture 7 avec un élément de piste 3 visé par cette consigne. Au bas de la figure 10, on a reproduit les variables. L'organigramme comporte l'introduction des échantillons numérisés $a_i$ et $b_i$ qui sont prélevés à intervalles réguliers $\tau$. Ces valeurs sont assignées aux variables a et b utilisées pour actualiser la variable $\phi$ grâce à une table de correspondance ou un calcul trigonométrique. Les variables $\phi_{-1}$ et $\phi$ ainsi que la variable k validée lors d'un calcul précédent servent à déterminer la variation de vitesse V permettant de procéder au premier test $-\pi < \Delta V < +\pi$. En cas de validation, ce test déclenche l'actualisation des variables V, N' et $\phi_{-1}$. L'actualisation effectuée, on revient à l'organigramme général de l'accès. En cas de non validation du test, on admet que la variable k doit être incrémentée ou décrémentée d'une unité, le choix étant déterminé par un second test $\Delta V > 0$ qui débouche sur deux boucles pouvant fonctionner de manière récursive jusqu'à validation du premier test. Il va sans dire que cet organigramme peut être adapté à la prise en compte d'un nombre plus grand d'échantillons pour se prémunir contre des lectures erronées.

Le test est caractérisé par des frontières fixes $+\pi$ et $-\pi$, mais on pourrait faire en sorte de déplacer ces frontières en fonction des accélérations rencontrées en cours d'accès. L'actualisation de la vitesse V est facultative, bien que sa connaissance soit utile en ce qui concerne la stabilité de l'asservissement radial ou la détermination d'un faux rond.

Cet organigramme ne mentionne pas les opérations d'initialisation, car elles sont gérées par l'organigramme général. Elles consistent à assigner une valeur nulle aux variables V et k lorsqu'un accès est entamé. On peut assigner à la variable N' la valeur $N_0$ qui définit la position de départ à l'ouverture de la boucle de suivi de piste.

Dans l'explication qui précède, on a supposé que les lois échantillonnées selon les rayons du disque sont respectivement sinusoïdale et cosinusoïdale. Dans ce cas, les valeurs de la fonction $F(\rho)$ sont déduites des couples d'échantillons $(a_i, b_i)$ par l'opération $\phi = $ arc tg b/a. Il va de soi que la disposition radiale des motifs affectés au repérage radial de la tache d'exploration peut engendrer des lois périodiques distinctes d'une fonction circulaire, ce qui n'empêche pas d'obtenir une fonction $F(\rho)$ en dents de scie, si l'on adopte pour la détermination des valeurs une règle de correspondance appropriée définie par exemple au moyen d'une table.

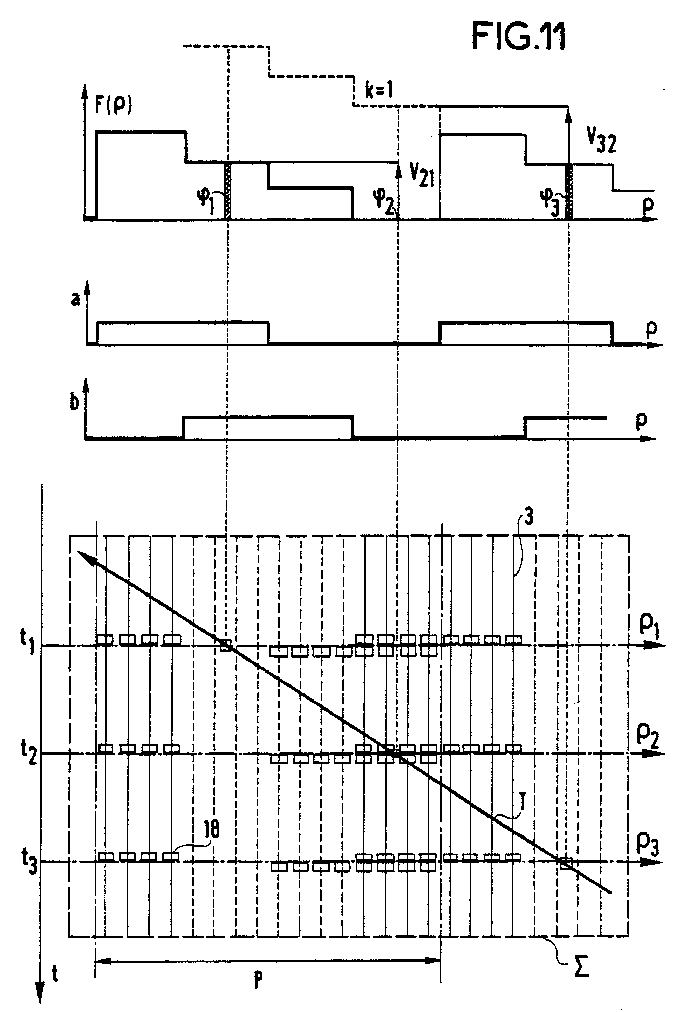

La mise en oeuvre d'une fonction $F(\rho)$ périodique en échelons est également comprise dans le cadre de la présente invention. La figure 11 donne à titre d'exemple non-limitatif un exemple de processus de comptage décomptage basé sur la matérialisation d'une fonction de repérage en escalier.

Cette figure est apparentée à la figure 9 et montre une portion de disque $\Sigma$ avec trois rayons $\rho_1$, $\rho_2$ et $\rho_3$ le long desquels sont agencés des motifs de prégravure.

Un ensemble d'éléments de piste équidistants est tracé perpendiculairement aux rayons $\rho_1$, $\rho_2$ et $\rho_3$. Ces éléments de piste sont groupés par paquets de 16 que l'on a rendu plus visibles sur la figure 11 en traçant en trait plein les quatre éléments d'extrémité et en pointillé les huit éléments centraux. Ainsi, on voit qu'un paquet de pas P est fait de quatre jeux de quatre éléments qui sont discernables les uns des autres par des combinaisons de motifs qui s'étendent de part et d'autre des rayons $\rho_1$, $\rho_2$, $\rho_3$. Les motifs utilisés sont par exemple centrés sur les éléments de piste et agencés le long de chaque rayon $\rho_1$, $\rho_2$ ou $\rho_3$ de façon que l'on rencontre à partir de la gauche quatre motifs supérieurs identifiant le premier jeu de quatre éléments, ensuite une absence totale de motif signalant le second jeu de quatre éléments, ensuite quatre motifs inférieurs identifiant le troisième jeu de quatre éléments et enfin quatre motifs supérieurs et quatre motifs inférieurs pour coder le quatrième jeu de quatre éléments. Un chapelet de motifs doit présenter des dimensions telles que le signal de lecture correspondant présente des niveaux moindres que le niveau atteint lors de l'exploration d'une plage lisse.

En isolant ce dernier niveau avec un circuit à seuil, l'exploration selon le rayon $\rho_1$ de la rangée supérieure de motifs produit la forme d'onde $b(\rho)$ illustrée sur la figure, tandis que l'exploration de la rangée inférieure de motifs produit la forme d'onde $a(\rho)$. La forme d'onde $F(\rho)$ prend l'allure représentée sur la figure 11, lorsqu'on la déduit des formes d'ondes $a(\rho)$ et $b(\rho)$ conformément au tableau ci-après :

| a | b | F |
|---|---|---|
| 1 | 0 | 270° |
| 1 | 1 | 180° |
| 0 | 1 | 90° |
| 0 | 0 | 0° |

Le choix des valeurs de F a été fait pour représenter la notion du quart de tour exprimé en degrés lors du franchissement d'un jeu de quatre pistes.

Sur la figure 11, on a représenté une trajectoire T parcourue de droite à gauche et qui rencontre successivement les rayons $\rho_3$, $\rho_2$ et $\rho_1$ aux instants d'échantillonnage $t_3$, $t_2$ et $t_1$. On dispose donc d'échantillons $\phi_3$ et $\phi_2$ permettant d'assigner une valeur $V_{32}$ à la vitesse de traversée des paquets d'éléments de piste.

La méthode de détermination ne diffère pas essentiellement de la méthode décrite précédemment et en particulier, on se rend compte que la frontière d'un paquet (ligne verticale en trait mixte) a été franchie entre les instants $t_3$ et $t_2$, ceci étant lié à la valeur de la variable k qui est + 1 dans ce cas. Ceci est illustré par le prolongement en pointillé de la fonction en escalier. A l'aide des échantillons $\phi_2$ et $\phi_1$, on réalise une nouvelle détermination de vitesse $V_{21}$ à laquelle correspond la valeur k = 0, qui indique que l'exploration entre les instants $t_2$ et $t_1$ est interne au paquet sans rencontrer de frontière.

Bien que la figure 11 ne le montre pas, les motifs peuvent avoir une longueur supérieure aux dimensions de la tache de lecture dans le sens des éléments de piste.

Lorsqu'une telle disposition est adoptée, il est possible que l'on éprouve une certaine difficulté à bien reconnaître le motif dans son environnement.

A ce propos, il y a lieu de préciser que l'échantillonnage d'un motif fait en général appel à une fenêtre d'échantillonnage plus large ou plus étroite que la portion de signal qui représente l'exploration du motif par la tache de lecture. Lorsque la fenêtre est étroite, on suppose que le niveau échantillonné est distinct du niveau représentant l'exploration d'une plage vierge de motif.

Par contre, si la fenêtre est large par rapport au motif, le signal prélevé contient de toute façon une paire de variations transitoires de niveau qui marquent la rencontre de la tache avec les bords d'attaque et de fuite du motif. En constatant ces deux variations dans la fenêtre, on peut conclure à la présence du motif, même si le niveau transmis au milieu de la fenêtre est resté égal à celui qui caractérise une plage vierge de disque. Pour reconnaître la présence de deux motifs successif, il y a lieu de prévoir deux fenêtres d'échantillonnage décalées qui prélève par encadrement l'interaction complète avec chaque motif. Lorsque les deux motifs se suivent sans intervalle suffisant entre eux, seuls les bords extérieurs sont reconnus et les variations de niveau normalement affectées à un motif ne sont pas simultanément présentes à l'intérieur d'une même fenêtre, ce qui permet de conclure à la coexistence des deux motifs. On est donc à même de départager les quatres cas qui peuvent se présenter pour créer la graduation radiale.

Dans les exemples de réalisation qui ont été décrits, on a fait appel à deux alignements de motifs rencontrés successivement par la tache d'exploration 7 dans le but d'obtenir deux lois radiales périodiques en quadrature qui définissent une graduation.

L'exploitation de ces lois se faisant par échantillonnage, on est amené à utiliser une méthode récursive pour définir un accès de manière absolue. L'actualisation d'une variable numérique pendant le déroulement de l'accès équivaut à une opération de dénombrement des traversées de piste.

On peut s'écarter de ce type de fonctionnement en diminuant le nombre de lois à prévoir autour de chaque rayon, ce qui revient par exemple à lire une loi unique avec dans la tête optique un système photodétecteur à cellule centrale et un système photodétecteur à deux demi cellules. Dans ce cas, les motifs créant la loi unique périodique donnent naissance à deux signaux en quadrature et ils peuvent être centrés sur les axes de piste 3.

Pour consommer peu de place dans la direction d'exploration de la piste, on a vu que la graduation radiale peut mettre en jeu la largeur des motifs et leur écartement pour générer des échantillons capables de prendre de nombreuses valeurs distinctes d'un axe de piste au suivant. Si les motifs présentent des anomalies de forme, il est judicieux de prévoir un algorithme de traitement des échantillons qui s'étende sur trois ou quatre saisies successives, afin que l'extrapolation puisse se faire tout en écartant les valeurs anormales prélevées.

L'exemple de la figure 11 montre que sans consommer plus de place un comptage-décomptage par paquets permet d'adopter un codage à deux éléments des niveaux d'une fonction périodique en escalier. Cette solution est moins vulnérable aux défauts de motifs et permettrait même de remplacer les chapelets de motifs par des bandes radiales plus ou moins larges dans le sens de l'exploration de la piste.

En acceptant de consommer davantage de place et donc d'effectuer plus de prélèvements autour de chaque rayon spécifique, on peut donner plus de détail aux graduations et à la limite simplifier le processus d'accès échantillonné en adoptant le concept de lecture d'adresse absolue au vol.

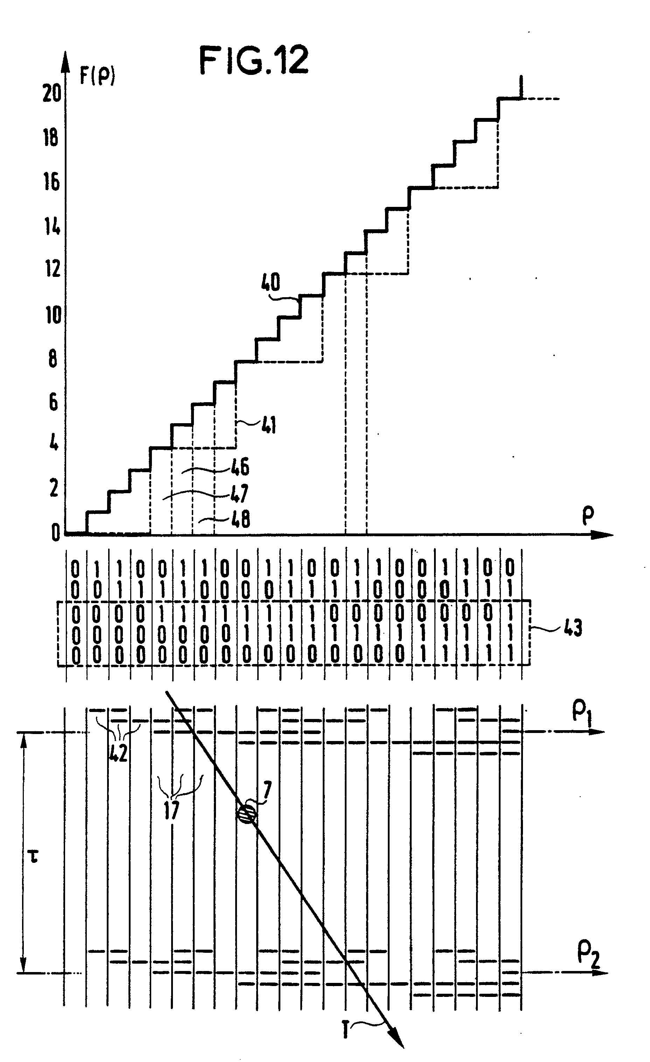

Sur la figure 12, on a représenté une fonction de graduation F($\rho$) en marches d'escalier. La courbe en trait plein 40 définit une graduation fine tandis que la courbe en pointillé 41 définit une autre graduation quatre fois moins fine. On voit que la graduation fine 40 ajoute trois niveaux à chaque gradin de la graduation plus grossière, ce qui fait apparaître une graduation différentielle périodique à trois gradins qui ressemble tout à fait à celle de la figure 11. On constate que les courbes 40 et 41 représentent des fonctions régulièrement croissantes permettant la lecture absolue de la position radiale ρ sur le disque.

Dans la partie basse de la figure 12, on a représenté une portion de la surface de référence 2 du disque 1. Les traits verticaux représentent les axes des interpistes. Deux rayons d'échantillonnage $\rho_1$ et $\rho_2$ sont tracés horizontalement à une distance qui équivaut dans le temps à une période d'échantillonnage $\tau$.

Pour matérialiser sur le disque la graduation radiale, on met en oeuvre des motifs de prégravure 42 qui sont répartis sur des rayons équidistants groupés autour des rayons $\rho_1$ et $\rho_2$. Sur la figure 12, cinq de ces rayons sont définis par les lignes de motifs 42 parallèles au rayons $\rho_1$ et $\rho_2$.

L'occupation de ces lignes par les motifs 42 est réalisé selon un code particulier que l'on a reproduit dans la partie médiane de la figure 12. Ce code comporte dans chaque colonne appairée avec une piste une adresse à cinq bits. Cette adresse est matérialisée dans le bas de la figure 12 où un motif 42 absent représente la valeur binaire "0" et un motif 42 présent, la valeur binaire "I". Chaque adresse complète de cinq bits désigne une valeur de la fonction en escalier 40. L'encadré en pointillé 43 contient les parties d'adresse formées des trois bits de plus fort poids qui définissent les valeurs de la fonction en escalier 41. Les deux bits de poids faibles forment des parties d'adresse qui représentent les valeurs de la fonction périodique permettant de convertir la courbe 41 en la courbe 40.

Le codage illustré sur la figure 12 est spécialement choisi pour que les adresses contenues dans deux colonnes contigues ne diffèrent l'une de l'autre que par une seule inversion de bit. Plus précisément, il s'agit d'un code binaire réfléchi que l'on peut construire en inscrivant dans la rangée supérieure un module "01" que l'on répète de gauche à droite en le permutant à chaque répétition. Dans la rangée suivante, on procède de la même manière à partir d'un module "0011" et ainsi de suite. Pour déterminer la valeur de F(ρ) à partir d'une adresse à n + 1 bits respectivement notés $a_n$, $a_{n-1}$..., $a_j$..., $a_2$, $a_1$, $a_0$, il y a lieu d'utiliser la relation :

$$F(\rho) = \sum_{k=n}^{k=0} 2^k \cdot \sum_{j=n}^{j=k} a_j$$

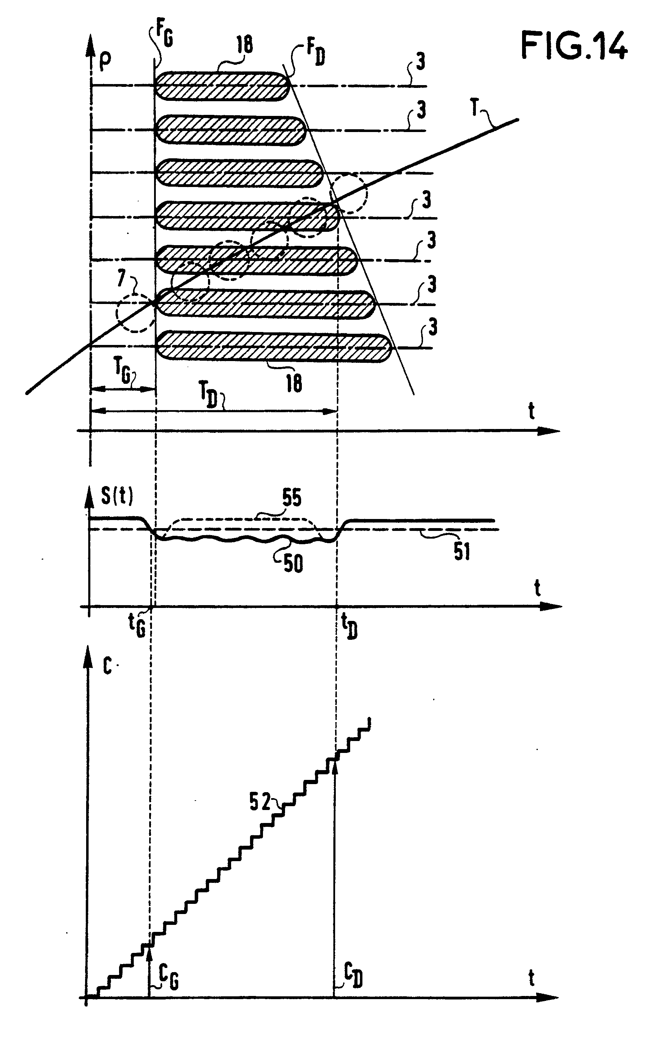

Cette relation est illustrée à la figure 13 dans le cas d'une adresse à cinq bits. Les additionneurs binaires 44 reçoivent chacun une valeur de bit contenu dans l'adresse 46 et l'ajoutent à la somme des valeurs des bits de plus fort poids. Les résultats qui apparaissent aux différentes sorties des additionneurs 44 sont affectés des poids indiqués sur la figure et sont additionnés par le circuit 45 qui délivre la valeur appropriée de F(ρ).

Un des avantages de la solution illustrée sur la figure 12 réside dans le fait que le passage d'un élément de piste au suivant ne modifie dans l'adresse complète qu'un seul bit. En se reportant à la trajectoire T illustrée sur la figure 12, on voit que la tache d'exploration 7 rencontre le rayon d'échantillonnage $\rho_1$ à cheval entre deux éléments de piste 17. La lecture d'adresse qui résulte de cette phase d'exploration est représentée par la case 46 sur le diagramme F(ρ), ρ, mais les bits de faible poids ne sont pas lisibles de façon stable, car il suffit d'un décalage faible de la trajectoire pour que l'un de ces bits soit interprété différemment. Cet échantillonnage pourrait aussi bien désigner la case 47 ou la case 48 ce qui n'a que peu d'incidence sur la valeur de F(ρ). Or précisément, on a vu que les bits de faible poids sont générateurs d'une graduation fine périodique pour laquelle on a vu qu'un traitement d'échantillons permet d'obtenir une indication absolue relative à l'accès. On constate également sur la figure 12 que la partie d'adresse comportant les bits de poids élevé est stable pour de petits décalages de trajectoire. Par cette partie d'adresse, on acquiert de façon plus grossière la notion du déplacement absolu puisqu'elle représente une fonction monotone en escalier. On aboutit à des conclusions similaires en considérant la rencontre de la trajectoire T avec le rayon d'échantillonnage $\rho_2$.

L'explication qui précède montre qu'en affectant à chaque élément de piste une adresse codée en binaire réfléchi, on réalise des graduations absolues en gradins d'autant plus fines que l'on a négligé moins de bits de poids faibles dans ces adresses. On peut aussi, à l'aide des mêmes adresses, considérer que l'on dispose de graduations périodiques d'autant plus détaillées sur une période accrue que l'on a négligé moins de bits de poids élevé. Ces deux approches peuvent être dosées en toutes proportions selon l'évolution des caractéristiques de l'accès. L'utilisation de motifs de prégravure définissant un adressage absolu des éléments de piste consomme plus de place sur le disque.

Un premier choix consiste à prévoir sur une révolution complète du disque un nombre restreint de rayons d'échantillonnages comportant chacun une adresse complète à 15 bits échantillonnée 250 fois par tour. La lecture complète de cette adresse est possible quand la vitesse d'accès est modérée, c'est à dire au commencement et à la fin d'un accès. La lecture partielle de l'adresse en cours d'accès peut servir à la détermination des conditions de fonctionnement du moteur d'accès.

Un second choix consiste à disposer sur l'élément de piste une partie de l'adresse complète à des intervalles plus rapprochés que la partie restante de l'adresse, ce qui conduit à prévoir au moins deux cadences d'échantillonnage. On peut par exemple adopter un agencement plus serré des adresses partielles formées de bits de faible poids et gérer ainsi une graduation par fonction périodique applicable à toute la durée de l'accès ; les adresses partielles formées des bits de poids fort sont agencées de façon plus lache pour finaliser l'accès grâce à la connaissance complète de l'adresse.

La solution inverse est également envisageable lorsqu'il s'agit de réaliser le pilotage de l'accès avec la lecture stable et fréquente des poids forts de l'adresse complète, une lecture finale devenant asymptotiquement complète par suite de la diminution de la vitesse de traversée.

En fin de compte, il n'y a pas de différence fondamentale entre une graduation basée sur des fonctions périodiques en quadrature et une graduation fondée sur la présence d'adresses absolues en code binaire réfléchi.

Dans la description qui précède, on a vu que la synthèse d'une graduation radiale pouvait se fonder sur les dimensions radiales des motifs spécifiques de l'accès sans attacher une importance particulière à leur extension le long des éléments de piste. Une adresse absolue peut être logée dans une séquence de cellules bits dont le contenu est saisi de façon plus ou moins complète par l'exploration qui en est faite par la tache de lecture.

Un avantage et non des moindres de la technique d'échantillonnage est la possibilité de différencier des motifs par leur longueur le long de l'élément de piste. On peut donc fonder une graduation radiale sur ce paramètre, ce qui est exclus dans le cas de disques à sillons continus. Cette technique a déjà trouvé application dans la mise en oeuvre de motifs de synchronisation comme illustré à la figure 6 où l'on a défini des distances non entières 2,5 L et 6,5 L.

L'adoption d'un codage en durée des motifs d'accès entre également dans le cadre de la présente invention.

Sur la figure 14, on a représenté un système d'axes $\rho,t$ où t représente le tels écoulé ou ce qui revient au même la distance parcourue selon les axes de piste 3. Dans ce système d'axe, on a représenté des éléments de piste adjacents dans une région contenant des motifs de prégravure 18. Une ligne $F_G$ forme à gauche l'enveloppe des bords d'attaque des motifs 18 et une autre ligne $F_D$ forme à droite l'enveloppe des bords de fuite des motifs 18. Le rayon $\rho$ représente une référence de temps pour l'exploration des motifs par la tache de lecture 7, on peut considérer les lignes $F_G$ et $F_D$

comme repésentatives de fonctions servant à établir une graduation radiale. L'intervalle $T_G$ ne varie pas d'un élément de piste au suivant, car la ligne $F_G$ est un rayon. Par contre, l'intervalle $T_D$ varie linéairement, car la ligne $F_D$ fait un angle constant avec le rayon du disque.

Lorsque la tache d'exploration 7 emprunte la trajectoire T, l'interaction optique donne naissance à un signal photodétecté S(t) illustré par la courbe 50 qui présente une zone déprimée correspondant à la rencontre avec les motifs 18.

Le niveau du signal S(t) à l'extérieur de cette zone est maximum car la tache d'exploration éclaire une partie lisse de la surface de référence 2 du disque 1. Le fond de la dépression 50 est situé suffisamment bas en dessous de ce niveau pour tomber sous un seuil de détection matérialisé par la ligne 51. On peut donc détecter l'instant $t_G$ où le signal S(t) tombe sous le seuil 51 et l'instant $t_D$ où il remonte au dessus du seuil. En déclenchant un compteur à l'instant de référence défini par le rayon $\rho$, on matérialise une loi en escalier 52 qui représente l'indication C du compteur en fonction du temps. On peut donc relever les indications du compteur aux instants $t_G$ et $t_D$ c'est à dire que l'on dispose ainsi d'échantillons $C_G$ et $C_D$ qui correspondent aux rencontres de la tache 7 avec les lignes $F_G$ et $F_D$. On voit que l'on peut jouer sur la position et la longueur des motifs 18 pour générer des fonctions permettant d'assurer une graduation de l'accès.

La précision avec laquelle les échantillons sont obtenus dépend de la résolution du compteur et de la rencontre légèrement fluctuante des motifs 18.

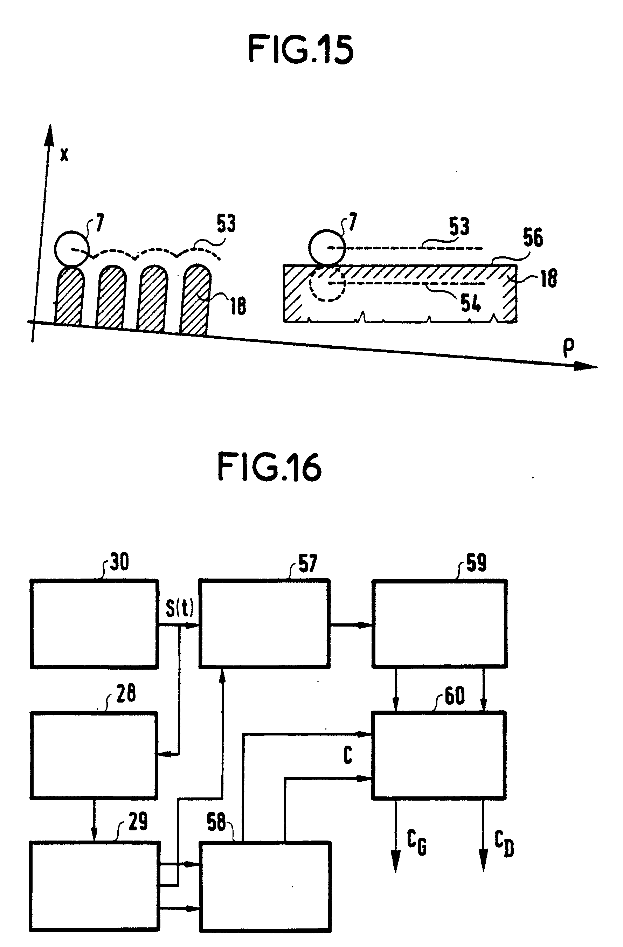

Cette fluctuation est illustrée sur la figure 15 qui représente dans un système d'axes $x,\rho$ les positions de la tache d'exploration 7 lorsque l'affaissement du signal S(t) commence ou se termine. La ligne 53 est le lieu géométrique du centre de la tache 7 et on voit que dans le cas de motifs 18 isolés radialement, elle fluctue légèrement ce qui entraine une imprécision dans l'évaluation des temps $t_G$ et $t_D$. Si les motifs 18 sont fusionnés en un seul comme illustré à droite sur la figure 15, la ligne 53 ne fluctue pas. Dans ce dernier cas, le signal S(t) sur la figure 14 comporte deux dépressions illustrées par la courbe en pointillé 55. En détectant ces transitions, on obtient une détermination précise des instants $t_G$ et $t_D$. Les bords du plateau de la courbe 55 correspondent sur la figure 15 à la ligne 54 qui est l'image de la ligne 53 par rapport au bord 56 du motif 18.

En ce qui concerne le prélèvement des échantillons $C_G$ et $C_D$, on peut se reporter au schéma de la figure 16 qui reprend certains éléments de la figure 7. La tête optique 30 délivre le signal de lecture S(t) au circuit 28 qui identifie les motifs de synchronisation et sert au recalage de l'horloge 29.

L'horloge 29 délivre une impulsion d'échantillonnage de durée suffisante pour encadrer la plage de temps correspondant à l'exploration des motifs d'accès 18 de la figure 14. Cette impulsion définit une fenêtre et commande le circuit de prélèvement 57 qui isole du signal S(t) la portion contenant l'interaction avec les motifs d'accès. Cette portion est transmise au circuit à seuil 59 qui détecte les instants $t_C$ et $t_D$ en émettant des impulsions de sélection appliquées au circuit d'échantillonnage 60.

Le circuit 60 échantillonne les indications C d'un compteur 58 qui reçoit du circuit 29 des impulsions d'horloge et une impulsion de remise à zéro qui coincide avec l'exploration par la tache lumineuse 7 du rayon de référence $\rho$ de la figure 14.

L' exploitation des échantillons $C_G$ et $C_D$ ne diffère pas de celle qui a été envisagée dans ce qui précède. On peut imaginer que $C_G$ et $C_D$ sont des échantillons appartenant à deux fonctions périodiques en quadrature. On peut également considérer que $C_G$ est un échantillon provenant d'une fonction en gradins et $C_D$ un échantillon provenant d'une fonction en dent de soie de façon à dénombrer un groupe G de paquets P d'éléments de piste par un adressage répétitif dont $C_G$ et $C_D$ sont des adresses partielles.

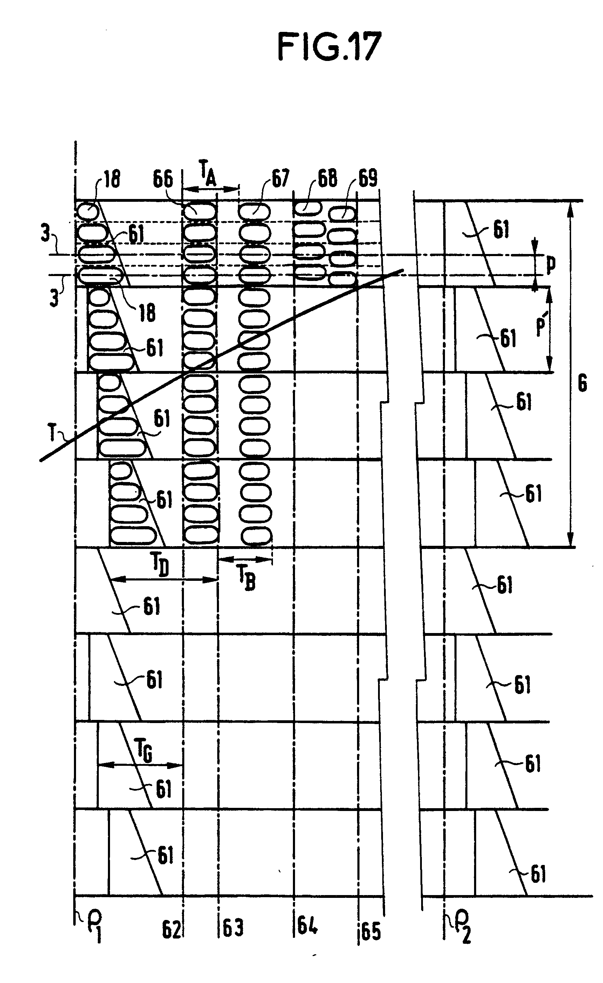

La figure 17 donne un exemple de prégravure assurant la graduation radiale pour l'accès au moyen de motifs spécifiques 18 à positions et longueurs non uniforme.

On a représenté sur la figure 17 deux rayons successifs $\rho_1$ et $\rho_2$ sans respecter leur écartement réel, car on a interrompu la zone illustrée en admettant que l'interruption contient les plages de données. Radialement, le disque est compartimenté en groupes G de 16 éléments de piste d'axes 3. A l'intérieur d'un groupe G, les éléments de piste sont groupés par paquets P' de quatre. On voit sur la figure 17 que les motifs 18 spécifiques de l'accès sont agencés dans des plages 61 à contour trapézoïdal. Le bord, gauche de chaque contour trapézoïdal est orienté selon un rayon de disque afin d'assigner à chaque paquet P' de quatre éléments de piste une valeur $T_G$ représentant le décalage du bord gauche par rapport su rayon de référence 62. Le bord droit de chaque contour trapézoïdal est incliné par rapport aux rayons du disque, afin d'assigner à chaque élément de piste d'un paquet une valeur $T_D$ représentant un décalage du bord droit par rapport au rayon 63. Cet agencement des motifs réalise une graduation par deux fonctions en gradins l'une de période

$$4\rho,$$

l'autre de période

$$16\rho \text{ où } \rho$$

représente le pas des éléments de piste. On voit sur la figure 17 que les motifs 18 spécifiques de l'accès sont associés à des motifs de synchronisation 66 et 67 qui définissent des intervalles $T_A$ et $T_B$ qui assurent leur identification dans le flot de motifs présents sur les axes 3. Les bords du motif 66 sont alignés sur les rayons de référence 62, et 63, afin de définir avec précision les instants de rencontre avec la tache d'exploration même lorsqu'elle emprunte la trajectoire T inclinée par rapport aux axes 3. La figure 17 montre également que la prégravure peut comporter des motifs 68 et 69 en déport par rapport aux axes 3 des éléments de piste, afin d'assurer la fonction suivi de piste par échantillonnage de la plage comprise entre les rayons 64 et 65.

Dans l'exemple de la figure 17, le bord gauche des contours trapézoïdaux 61 sert de graduation grossière alors que le bord droit sert de graduation fine. Ces deux graduations ne sont pas nécessairement à réunir dans un même contour trapézoïdal puisque l'on peut les prévoir alternativement lorsqu'on agence le long des éléments de piste des motifs 18 qui sont encadrés par des motifs trapézoïdaux différenciés.

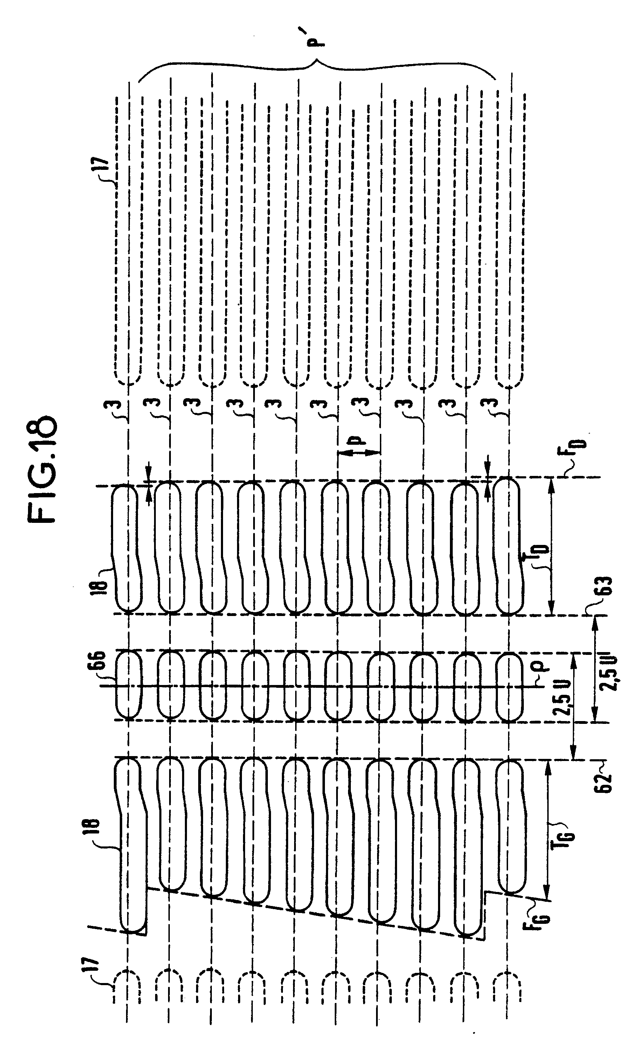

Le figure 18 illustre une autre variante de réalisation des motifs de prégravure selon l'invention. On a représenté sur la figure 18 un paquet P' d'éléments de piste 17 comprenant par exemple huit éléments dont les axes 3 sont distants de p. On a également représenté en haut de la figure, le dernier élément du paquet précédent et en bas, le premier élément du paquet suivant. Les paquets P' forment par exemple des groupes de huit de sorte que la configuration des motifs de prégravure présente radialement une période égale à soixante quatre pas p. On a représenté en pointillé des plages de données qui encadrent la région centrale de la figure 18 où apparaissent les motifs de prégravure 18 et 66. Les motifs 66 centrés sur un rayon $\rho$ et sur les axes 3 ont une longueur constante, afin que leurs bords soient alignés selon des rayons. L'expression "longueur" est ici reliée à la notion de couverture angulaire, car il ne faut pas perdre de vue que les axes 3 sont incurvés dans la réalité.

Moyennant cette remarque, on voit que l'on a encadré chaque motif 66 par deux motifs 18 dont les bords intérieurs centrés sur les axes 3 sont alignés sur des rayons 62 et 63. On voit sur la figure 18 que le bord d'attaque du motif central 66 est à la distance

$$2,5 \; U$$

du bord attaque du motif 18 situé à sa droite. De même le bord de fuite du motif 66 est distant de

$$2,5 U$$

du bord de fuite du motif 18 placé à sa gauche.
Le symbole

$$U$$

désigne une longueur de référence qui le long de la piste sert à localiser les motifs spécifiques de l'emmagasinage des données. Il est donc admis que l'exploration de la piste ne fournit les interdistances

$$2,5 \; U$$

entre bords homologues de motifs que pour la combinaison 18-66-18 illustrée sur la figure 18. Ainsi, cette combinaison forme un dispositif de synchronisation qui a les mêmes propriétés que celle illustrée à la figure 17 par la succesion des motifs 66 et 67.

Conformément à l'invention, les motifs 18 servent à l'établissement d'une graduation radiale obtenue sur la figure 18 en modulant les positions des bords extérieurs de ces motifs. Cette modulation engendre des lignes enveloppes $F_G$ et $F_D$ comme à la figure 14, mais sur la figure 18 les bords de motifs 18 utilisés à cette fin présentent un déport radial par rapport aux axes de piste 3. Cette différence, qui n'empêche pas la matérialisation de la graduation périodique nécessaire à la fonction accès, offre l'avantage de remplir aussi la fonction suivi de piste et la fonction synchronisation. Pour obtenir cette fonctionnalité poussée à l'extrème, l'invention prévoit d'utiliser des motifs 18 comportant au moins une portion centrée et une portion déportée, ce qui revient comme dans le cas de la figure 6 à réaliser avec les mêmes motifs les fonctions d'accès et de suivi de piste.

Dans le même ordre d'idée, on peut réunir ces fonctions au moyen de motifs de prégravure présentant un déport sur toute leur longueur.

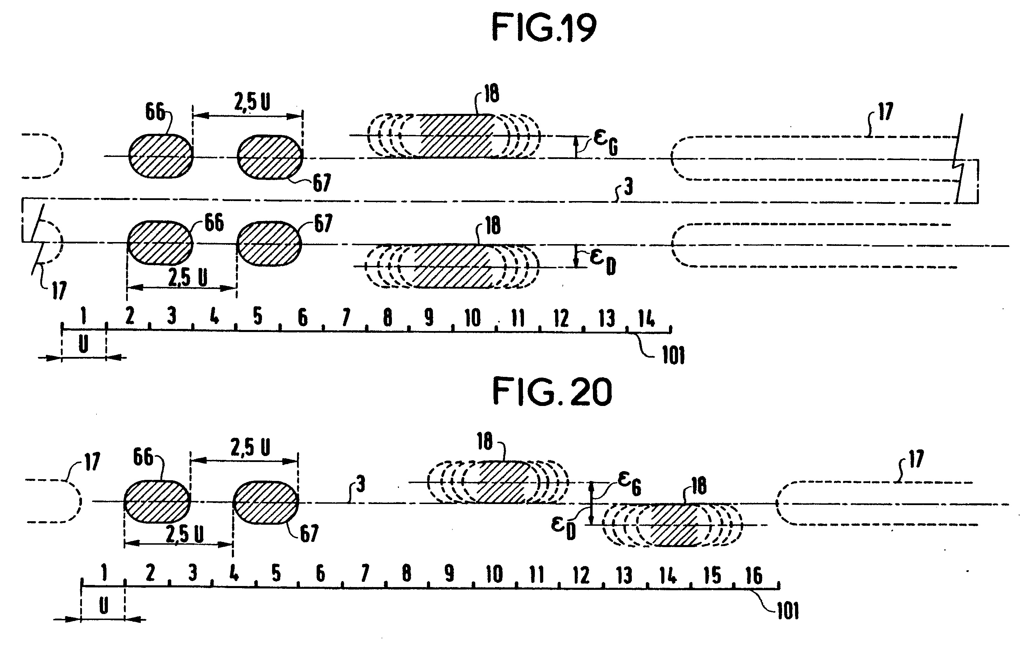

La figure 19 illustre une variante de réalisation permettant un gain de place en répartissant les motifs sur deux plages séparées par une plage de données 17. Pour mieux faire apparaître la localisation périodique des zones occupées par les motifs de prégravure, on a replié deux fois en méandre l'axe 3 de l'élément de piste. La partie de rang impair illustrée en haut de la figure 19 débute par deux motifs de synchronisation 66 et 67 qui présentent par rapport à la graduation 101 deux distances spécifiques demi entières

$$2,5 \, U.$$

Les motifs 66 et 67 sont suivis à une distance convenable par un motif en déport 18. Les bords d'attaque et de fuite de ce motif peuvent occuper quatre positions représentées par quatre demi cercles en pointillé à gauche et quatre demi cercles en pointillé à droite. Le motif 18 est donc un moyen d'adressage permettant de distinguer les uns des autres seize éléments de piste qui forment un paquet. La partie de rang pair illustrée en bas de la figure 19 comporte aussi un motif 18 qui peut servir à l'adressage de seize paquets d'éléments formant un groupe de 256 éléments de piste. Un tel groupe se répète périodiquement à l'intérieur de la plage utile du disque. On voit sur la figure 19 que les motifs 18 présentent alternativement un déport $\epsilon_G$ et un déport $\epsilon_D$ permettant de déterminer l'excentrement de la tache de lecture par rapport à l'axe 3.

La fréquence d'échantillonnage de la paire de motifs affectée à l'évaluation de l'excentrement est donc réduite de moitié par rapport à celle des motifs de synchronisation 66 et 67.

La disposition illustrée à la figure 20 assure un échantillonnage deux fois plus fréquent de l'excentrement de la tache d'exploration puisque les deux motifs 18 de la figure 19 sont réunis dans l'intervalle séparant deux blocs de données 17. Cette dernière configuration est légèrement moins compacte que la précédente, mais elle permet une plus grande fréquence d'échantillonnage du suivi et de la graduation de l'accès.

Les disques munis de motifs de prégravure spécifiques d'une graduation radiale de type absolu ou périodique peuvent présenter des configurations très variées et à échantillonnage plus ou moins fréquent ainsi que décrit précédemment. Le fait d'abandonner le concept de la continuité de la piste apporte une grande facilité puisque l'accès à une piste devient un processus de même nature que les processus déjà mis en oeuvre pour assurer le suivi, la focalisation et la synchronisation de l'exploration d'un disque avec une tache de lecture. Moyennant un échantillonnage suffisamment fréquent, on a vu que les mouvements sont déterminables sans la moindre ambiguité et avec une précision tout à fait suffisante dans la pratique. Le choix de motifs de prégravure ayant des formes simples n'empêche pas de les doter d'une grande capacité d'information et on a vu que cette capacité peut être acquise en occupant peu de place sur la disque. La création des motifs de prégravure spécifiques de l'accès peut aussi bien être une étape qui a précédé tout enregistrement optique sur le disque qu'une étape postérieure mettant en oeuvre leur écriture. Dans ce cas, ils ne diffèrent des données utilisateur que par leur emplacement sur le disque et par la source d'information qui les a conditionnés. Dans ces conditions, tout ce qui a précédé l'écriture sur un disque de données utilisateur est de la prégravure au sens de la présente invention. De même, des motifs sont spécifiques de l'accès, dès lors qu'ils sont agencés spécialement en vue de ce résultat, même lorsqu'ils étaient affectés à d'autres taches n'ayant pas jusqu'ici suggéré l'agencement approprié.

Dans la description qui précède, on a fait référence à une technique d'identification des motifs de synchronisation basée sur la mise en oeuvre de distances demi-entières, cependant l'invention n'est nullement limitée à ce cas particulier.

De même, on a vu qu'il peut se faire que la tache d'exploration donne la même interaction optique avec le motif lorsqu'elle est totalement à l'intérieur de son contour ou lorsqu'elle est complètement extérieure à celui-ci. Dans ce cas, on substitue à l'échantillonnage plein du motif un échantillonnage marginal qui lui se démarque aisément de la non rencontre du motif par la tache d'exploration.

## Revendications

1. Support d'information en forme de disque (1) comportant dans une surface de référence (2) un ensemble d'éléments de piste adjacents dont les axes respectifs incurvés (3) sont matérialisés par des motifs de prégravure (18) qui alternent le long desdits axes avec des plages (17) réservées à l'emmagasinage de ladite information ; lesdits axes incurvés ayant un centre de rotation commun (0) d'où sont issus des rayons (6) porteurs desdits motifs ; une première famille de N rayons à répartition équiangulaire définissant avec chacun desdits axes des sites d'intersection occupés par des motifs de synchronisation, caractérisé en ce qu'il comprend au moins une autre famille de rayons obtenue par un décalage angulaire prédéterminé de P rayons appartenant à ladite première famille et munie selon ses P rayons d'une graduation (21,40,41) ; ladite graduation étant constituée par un agencement radial de motifs spécifiques (18) dont les interactions optiques répétées avec une tache de lecture focalisée explorant ladite surface de référence permettent, au cours des traversées de piste, de détecter l'ampleur et le signe d'un déplacement radial de ladite tache dans l'étendue dudit ensemble ; ledit agencement radial produisant lorsqu'il est rencontré par la tache de lecture un marquage défini ($\phi$) de sa position instantanée vis à vis de ladite graduation.

2. Support d'information selon la revendication 1, caractérisé en ce que ladite graduation engendre par l'exploration radiale dudit agencement deux fonctions périodiques de même périodicité présentant entre elles un déphasage significatif.

3. Support d'information selon la revendication 2, caractérisé en ce que lesdites fonctions sont produites chacune par le balayage radial d'une rangée desdits motifs spécifiques.

4. Support d'information selon la revendication 2, caractérisé en ce que lesdites fonctions sont produites par le balayage radial de deux rangées ($\rho_a, \rho_b$) desdits motifs spécifiques (18).

5. Support d'information selon la revendication 4, caractérisé en ce que les motifs spécifiques (18) de la première ($\rho_a$) desdites rangées présentent un déport prédéterminé par rapport à chacun desdits axes incurvés (3); les motifs spécifiques (18) de la seconde ($\rho_b$) desdites rangées présentant un déport égal et de signe contraire à celui des motifs de la première rangée.

6. Support d'information selon la revendication 1, caractérisé en ce que ledit agencement radial de motifs (42) définit à l'intersection avec lesdits axes (3) des adresses numériques (43) exprimant les positions absolues de ceux-ci en code binaire réfléchi.

7. Support d'information selon la revendication 6, caractérisé en ce que lesdites adresses numériques sont distinctes et en nombre égal auxdits axes (3).

8. Support d'information selon la revendication 1, caractérisé en ce que lesdits éléments de piste sont groupés par paquets ; des adresses numériques définies par ledit agencement radial de motifs (18) à l'intersection avec lesdits axes (3) étant les mêmes à l'intérieur d'un paquet et distinctes d'un paquet au paquet voisin.

9. Support d'information selon la revendication 8, caractérisé en ce que les paquets (P') forment un groupe (G) et en ce que plusieurs desdits groupes sont agencés radialement dans la plage annulaire contenant lesdits éléments de piste.

**10.** Support d'information selon la revendication 1, caractérisé en ce que ledit agencement radial de motifs représente une fonction en gradins ($F_G$) dont les valeurs successives sont liées à la position relative des bords desdits motifs (18) rapportée à un rayon de référence ($\rho$) ; ladite position étant mesurée dans la direction desdits axes (3).

**11.** Support d'information selon la revendication 10, caractérisé en ce que ladite fonction en gradins est périodique.

**12.** Support d'information selon la revendication 10, caractérisé en ce que l'un au moins desdits bords peut occuper plusieurs positions prédéterminées par rapport audit rayon de référence.

**13.** Support d'information selon la revendication 10, caractérisé en ce que plusieurs motifs (18) rencontrés successivement sur l'un desdits axes (3) sont nécessaires pour définir la valeur de ladite fonction en gradins ($F_G, F_D$) assignée audit axe (3).

**14.** Support d'information selon l'une quelconque des revendications 1 à 13, caractérisé en ce que lesdits motifs (18) comportent une partie centrée et une partie déportée par rapport auxdits axes (3).

**15.** Support d'information selon la revendication 6, caractérisé en ce que lesdites adresses numériques comportent au moins deux parties ($F_G, F_D$) exprimées respectivement par des agencements de motifs (18) qui se succèdent le long desdits axes (3).

**16.** Support d'information selon l'une quelconque des revendications précédentes, caractérise en ce que les rayons de la deuxième famille issus de la première famille sont équiangulaires.

**17.** Support d'information selon la revendication 16, caractérisé en ce que lesdites familles ont le même nombre de rayons.

**18.** Dispositif d'exploration optique à accès échantillonné destiné à la mise en oeuvre d'un support d'information (1) selon la revendication 1, ledit dispositif comprenant une tête optique (8) projetant dans la surface de référence (2) une tache d'exploration (7) focalisée qui peut se déplacer selon une trajectoire (16) traversant lesdits éléments de piste (17,18) sous la commande d'un moteur d'accès (9) ; ladite tête optique étant associée à des moyens photodétecteurs (30) recueillant une fraction du rayonnement qui émerge de la portion de surface (2) éclairée par ladite tache ; ledit dispositif comprenant des moyens de commande (10) dudit moteur d'accès recevant l'adresse de destination de l'accès à effectuer et les signaux électriques délivrés par lesdits moyens photodétecteurs, caractérisé en ce que lesdits moyens de commande comprennent des moyens d'échantillonnage (26) prélevant à chaque rencontre de ladite tache avec les rayons munis de ladite graduation au moins une valeur numérique ($\phi$) qui sert à situer radialement ladite tache lorsque son mouvement s'étend au chevauchement successif de plusieurs éléments de piste ; ladite valeur numérique représentant au moins le reste de la division d'une grandeur absolue ($\Phi$) caractéristique de la position radiale de ladite tache par un nombre caractéristique de ladite graduation.

**19.** Dispositif d'exploration optique selon la revendication 18, caractérisé en ce que ladite valeur numérique ($\phi$) se confond avec ladite grandeur, absolue ($\Phi$) ; ledit nombre caractéristique étant l'unité.

**20.** Dispositif d'exploration optique selon la revendication 18, caractérisé en ce que ledit nombre caractéristique n'étant pas l'unité, il représente pas de ladite graduation.

**21.** Dispositif d'exploration optique selon la revendication 20, caractérisé en ce que ledit pas est celui desdits éléments de piste.

**22.** Dispositif d'exploration optique selon la revendication 20, caractérisé en ce que ledit pas est élargi à plusieurs éléments de piste adjacents (17).

**23.** Dispositif d'exploration optique selon la revendication 18, caractérisé en ce que lesdits moyens d'échantillonnage comprennent des moyens de prélèvement d'une paire d'échantillons (a,b) provenant desdits signaux électriques, des moyens de commande de prélèvement (29) synchronisés à partir de l'exploration desdits motifs de synchronisation, des moyens de numérisation des échantillons de ladite paire et des moyens de détermination (32) de ladite valeur numérique à partir de ladite paire d'échantillons.

**24.** Dispositif d'exploration optique selon la revendication 23, caractérisé en ce que ladite valeur numérique est l'angle d'un vecteur ayant pour composantes ladite paire d'échantillons.

25. Dispositif d'exploration optique selon la revendication 18, caractérisé en ce que lesdits moyens d'échantillonnage comprennent des moyens de prélèvement d'une portion desdits signaux électriques renfermant les transitions qui correspondent à la rencontre des bords desdits motifs spécifiques (18) par ladite tache d'exploration (3), des moyens de commande de prélèvement synchronisés à partir de l'exploration desdits motifs des synchronisation, des moyens de comptage initialisés par lesdits moyens de commande et des moyens exécutant la saisie de ladite valeur numérique en coïncidence avec l'une au moins desdites transitions et à partir de l'indication donnée par lesdits moyens de comptage.

26. Dispositif d'exploration optique selon la revendication 18, caractérisé en ce que plusieurs desdites transitions fournissent des valeurs numériques caractéristiques de la rencontre des bords d'attaque et de fuite desdits motifs spécifiques (18).

27. Dispositif d'exploration optique selon la revendication 18, caractérisé en ce que lesdits moyens d'échantillonnage comprennent des moyens (44,45,46) de prélèvement d'échantillons destinés à exprimer ladite valeur numérique à partir d'une adresse en code binaire refléchi de commande de prélèvement synchronisés à partir de l'exploration desdits motifs de synchronisation (22,23).

28. Dispositif d'exploration optique selon la revendication 27, caractérisé en ce que ladite valeur numérique résulte de l'interprétation d'une partie (43) au moins de ladite adresse.

29. Dispositif d'exploration optique selon la revendication 27, caractérisé en ce que des parties de ladite adresse sont prélevées à des emplacements non contigus le long desdits axes.

30. Dispositif d'exploration optique selon la revendication 29, caractérisé en ce que certaines parties sont prélevées plus fréquemment que d'autres.

31. Dispositif d'exploration optique selon la revendication 18, caractérisé en ce que lesdits moyens d'échantillonnage comprennent des moyens de prélèvement de ladite valeur numérique basés sur la rencontre des bords desdits motifs spécifiques par la tache d'exploration ; ladite rencontre étant susceptible de se produire à des instants d'échantillonnage présentant des décalages prédéterminés par rapport à l'impulsion de synchronisation produite en réponse à l'exploration desdits motifs de synchronisation.

32. Dispositif d'exploration selon l'une quelconque des revendications 18 à 31, caractérisé en ce qu'il comprend des moyens de traitement (32) de ladite valeur numérique ($\phi$) permettant par extrapolation linéaire et en considérant au moins une valeur numérique antérieurement prélevée, de valider une valeur nouvelle de ladite grandeur absolue ($\Phi$) connaissant sa précédente valeur.

33. Dispositif d'exploration selon l'une quelconque des revendications 18 à 32, caractérisé en ce que lesdits moyens d'échantillonnage fournissent des échantillons utiles à la commande de suivi de piste (31).

34. Dispositif d'exploration selon l'une quelconque des revendications 18 à 33, caractérisé en ce que lesdits moyens d'échantillonnage fournissent des transitions($T_G$)utiles à l'identification des motifs de synchronisation.

35. Un procédé d'accès en mode échantillonné à une piste d'un support d'information (1) selon la revendication 1, caractérisé par les étapes suivantes :
    - balayage par une tache lumineuse de lecture focalisée de la surface de référence (2) dans une direction transversale aux pistes ;
    - détermination de l'amplitude et du signe du déplacement radial de la tache à l'intérieur d'un ensemble d'éléments de piste adjacente lorsque la tache interagit optiquement et de manière répétée avec l'échelle de graduation, et
    - détermination de la position instantannée de la tache par rapport à l'échelle de graduation lorsque la tache balaye l'agencement radial, lesdites déterminations étant utilisées pour calculer la position de la tache afin d'accéder à une piste donnée.

36. Un procédé selon la revendication 35, caractérisé en ce que l'échelle de graduation est adaptée pour engendrer lors de l'exploration radiale dudit agencement deux fonctions périodiques de même période et présentant entre elles un déphasage significatif.

37. Un procédé selon la revendication 36, caractérisé en ce que la détermination de la position absolue de la tache le long d'un rayon est obtenue en utilisant deux positions connues afin de déterminer la vitesse de déplacement de la tache et d'extrapoler linéairement ladite position absolue.

38. Un procédé selon la revendication 35, caractérise en ce que l'échelle de graduation est une échelle donnant une adresse absolue lors de l'exploration par la tache de lecture.

39. Un procédé selon la revendication 38, caractérisé en ce que l'adresse absolue complète est obtenue par lecture de plusieurs sites où figurent les adresses partielles.

## Claims

1. A data storage medium in the form of a disk (1) comprising a set of adjacent track elements (3) on a reference surface (2), whose respective curved axes are provided with pre-engraved patterns (18) , which alternate with areas (17) reserved for storing said data; said curved axes having a common rotation center (0), wherefrom radii (6) carrying said patterns issue; a first set of N radii equi-angularly spaced out and defining with each of said axes sites of intersections which are occupied by synchronization patterns, characterized in that said data storage medium comprises at least one further set of radii obtained by way of a predetermined angular offset of N radii belonging to said first set and being provided with a graduation scale (21, 40, 41) on its P radii; said graduation scale being constituted of a radial arrangement of specific patterns (18) whose repeated optical interactions with a focussed reading spot during the scan of said reference surface allow to detect, while passing over the tracks, the magnitude and the sign of a radial displacement of said spot within the range of said set, said radial arrangement producing a defined mark ($\phi$) of its instantaneous position relative to said graduation scale when being crossed by the reading spot.

2. A data storage medium according to claim 1, characterized in that said graduation scale scale is adapted to generate, by radially scanning said arrangement, two periodic functions with equal period times but with is a substantial phase difference.

3. A data storage medium according to claim 2, characterized in that said functions are each produced by the radial scanning of a row of said specific patterns.

4. A data storage mediuim according to claim 2, characterized in that said functions are produced by radially scanning two rows ($\rho_a$, $\rho_b$) of said specific patterns (18).

5. A data storage medium according to claim 4, characterized in that the specific patterns (18) of the first ($\rho_a$) of said rows are subject to a predetermined offset relative to each of said curved axes (3), with the specific patterns (18) of the second ($\rho_b$) of said rows being subject to an offset, whose amount is equal to and whose sense is opposite to the one of the patterns of the first row.

6. A data storage medium according to claim 1, characterized in that said radial arrangement of patterns (42) defines at the intersections with said axes (3) digital addresses (43) adapted to express the absolute positions of said intersections in terms of a reflected binary code.

7. A data storage medium according to claim 6, characterized in that said digital addresses are distinct among each other and amount to a number equal to said axes (3).

8. A data storage medium according to claim 1, characterized in that said elements are grouped in packets, digital addresses defined by said radial arrangement of patterns (18) and relating to the intersections with said axes (3) being the same within a packet and distinct from one packet to the adjacent packet.

9. A data storage medium according to claim 8, characterized in that the packets (P') form a group (G), and in that several groups are arranged radially within the annular area which contains said track elements.

10. A data storage medium according to claim 1, characterized in that said radial arrangement represents a staircase function ($F_G$) whose successive values are associated with the relative position of the edges of said patterns (18) related to a reference radius ($\rho$), said position being measured in the direction of said axes (3).

11. A data storage medium according to claim 10, characterized in that said staircase function is a periodic function.

12. A data storage medium according to claim 10, characterized in that at least one of said edges may occupy several predetermined positions relative to said reference radius.

**13.** A data storage medium according to claim 10, characterized in that a plurality of patterns (18) met successively on one of said axes (3) is needed for defining the value of said staircase function ($F_G$, $F_D$) assigned to said axis (3)

**14.** A data storage medium according to any one of claims 1 to 13, characterized in that said patterns (18) comprise a centered portion and a portion offset in relation to said axes (3).

**15.** A data storage medium according to claim 6, characterized in that said digital addresses comprise at least two portions ($F_G$, $F_D$) adapted to be expressed respectively by pattern arrangements (18) which follow one another along said axes (3).

**16.** A data storage medium according to any one of the preceding claims, characterized in that the radii of the second set derived from the first set are angularly spaced.

**17.** A data storage medium according to claim 16, characterized in that said sets have the same number of radii.

**18.** An optical scanning device of the sample access type, intended for putting to use a data storage medium (1), according to claim 1, said device comprising an optical head (8) adapted to project a focussed scanning spot (7) onto the reference surface (2), and which is able to move along a trajectory (16) conceived to traverse said track elements (17, 18) under the control of an access motor (9), said optical head being associated with photosensing means (30) adapted to receive a fraction of radiation emerging from the surface portion (2) illuminated by said spot, said device comprising control means (10) controlling said access motor and receiving the destination address of the access to be performed and the electrical signals delivered by said photosensing means, characterized in that said control means include sampling means (26) adapted to pick up at least one digital value ($\phi$) at each crossing of said spot with the radii carrying said graduation scale, which value serves to localize said spot radially when its movement successively straddles a plurality of the track elements, said digital value being adapted to represent at least the remainder of a division operation in which an absolute quantity ($\Phi$) representing the radial position of said spot is divided by a number characterizing said graduation scale.

**19.** An optical scanning device according to claim

**18**, characterized in that said digital value ($\phi$) merges with said absolute quantitiy ($\Phi$), said characteristic number being unity.

**20.** An optical scanning device according to claim 18, characterized in that the characteristic number is different from unity and represents one step of the graduation scale.

**21.** An optical scanning device according to claim 20, characterized in that said scale step corresponds to the distance between the track elements.

**22.** An optical scanning device according to claim 20, characterized in that said scale step is extended to include a plurality of adjacent track elements (17).

**23.** An optical scanning device according to claim 18, characterized in that said sampling means comprise pick-up means for picking up one pair of samples (a, b) provided by said electrical signals, pick-up control means (29) which are synchronized from the scanning of said synchronization patterns, digitizing means for converting the samples of said pair into digitized form, and means (32) for determining said digital value from said pair of samples.

**24.** An optical scanning device according to claim 23, characterized in that said digital value corresponds to the angle of a vector, whose components are constituted by said pair of samples.

**25.** An optical scanning device according to claim 18, characterized in that said sampling means comprise pick-up means for picking up a portion of said electrical signals including the transients which correspond to the crossing of the edges of said specific patterns (18) by said scanning spot (3), pick-up control means synchronized from said synchronization means, counting means initialized by said control means, and means adapted to perform the seizure of said digital value in coincidence with at least one of said transients and on the basis of data given by said counting means.

**26.** An optical scanning device according to claim 18, characterized in that several transients deliver digital values which are characteristic of the crossing of said front and rear edges of said specific patterns (18).

**27.** An optical scanning device according to claim 18, characterized in that said sampling means include means (44, 45, 46) for picking up samples intended to express said digital value from a pick-up address control written in reflected binary code, which means are synchronized from the scanning of said synchronization patterns (22, 23).

28. An optical scanning device according to claim 27, characterized in that said ditigal value results from the interpretation of at least a portion (43) of said address.

29. An optical device according to claim 27, characterized in that portions of said address are picked-up at non-contiguous locations along said axes.

30. An optical scanning device according to claim 29, characterized in that certain portions are picked up more frequently than others.

31. An optical scanning device according to claim 18, characterized in that said sampling means comprise pick-up means for picking up said digital value, which means operate on the basis of the crossing of the edges of said specific patterns by the scanning spot, said crossing being susceptible to occur at sampling instants which are subject to predetermined offsets relative to the synchronizing pulse produced in reply to the scanning of said synchronization patterns.

32. A scanning device according to any one of claims 18 to 31, characterized in that it includes processing means (32) adapted to process said digital value ($\phi$) and allowing for linear extrapolation, and, in consideration of at least one digital value picked up earlier, for validating a new value of said absolute quantity ($\Phi$) while knowing its prior value.

33. A scanning device according to any one of claims 18 to 32, characterized in that said sampling means deliver samples suitable for the tracking control (31).

34. A scanning device according to any one of claims 18 to 33, characterized in that said sampling means deliver transitions ($T_G$) suitable for the identification of the synchronization patterns.

35. An access method of the sampled access type applied to a data storage medium (1) according to claim 1, characterized in that it comprises the following steps,
   - scanning, with a focussed reading light spot, of said reference surface in a direction transverse to said tracks,
   - determination of the amplitude and of the sign of radial displacement of said spot within said set of adjacent track elements when said spot interacts optically and repeatedly with said graduation scale, and
   - determination of an instantaneous position of said spot relative to said graduation scale when said spot scans said radial arrangement, said determinations being used to calculate the position of the spot in order to access a given track.

36. A method according to claim 35, characterized in that the graduation scale is adapted to generate through radial scanning of said arrangement two periodic functions having the same period but a substantial phase difference therebetween.

37. A method according to claim 36, characterized in that the determination of the absolute position of said spot along a radius is obtained by using two known positions in order to determine the displacement speed of the spot and to linearly extrapolate said absolute position.

38. A method according to claim 35, characterized in that the graduation scale is a scale providing an absolute address in the course of scanning by the reading spot.

39. A method according to claim 38, characterized in that the complete absolute address is obtained by reading several locations wherein the partial addresses figure.

## Patentansprüche

1. Informationsträger in Form einer Scheibe (1), der in einer Bezugsoberfläche (2) einen Satz von benachbarten Spurelementen aufweist, deren jeweilige gekrümmte Achsen (3) durch vorgravierte Motive (18) gebildet sind, die entlang der Achsen mit Bereichen (17) zur Speicherung der Informationen abwechseln, wobei die gekrümmten Achsen ein gemeinsames Drehzentrum (0) besitzen, von wo die Motive tragende Radien (6) ausgehen, und wobei eine erste Schar von N in gleichen Winkelabständen verteilten Radien mit jeder der Achsen Kreuzungspunkte definieren, die von Synchronisierungsmotiven besetzt sind, dadurch gekennzeichnet, daß der Träger mindestens eine weitere Schar von Radien aufweist, die durch eine vorbestimmte winkelmäßige. Versetzung von P der ersten Schar angehörender Radien erhalten werden und entlang ihrer P Radien mit einer Abstufung (21, 40, 41) versehen sind, wobei die Abstufung aus einer radialen Anordnung spezifischer Motive (18) besteht, deren wiederholte optische Wechselwirkungen mit einem die Bezugsoberfläche abtastenden fokussierten Lesefleck es beim Überstreichen der Spur ermöglichen, das Ausmaß und das Vorzeichen einer radialen Verschiebung des Flecks in der Ausdehnung des Spurelementsatzes zu erfassen, wobei die Radialanordnung beim Zusammentreffen mit dem Lesefleck eine definierte Markierung ($\phi$) ihrer Momentanposition zur Abstufung erzeugt.

2. Informationsträger nach Anspruch 1, dadurch gekennzeichnet, daß die Abstufung durch die radiale Abtastung der Radialanordnung zwei periodische Funktionen gleicher Periodizität hervorbringt, die untereinander eine signifikante Phasenverschiebung aufweisen.

3. Informationsträger nach Anspruch 2, dadurch gekennzeichnet, daß die Funktionen jeweils durch das radiale Überstreichen einer Reihe der spezifischen Motive produziert werden.

4. Informationsträger nach Anspruch 2, dadurch gekennzeichnet, daß die Funktionen durch radiales Überstreichen von zwei Reihen ($\rho_a$, $\rho_b$) der spezifischen Motive (18) produziert werden.

5. Informationsträger nach Anspruch 4, dadurch gekennzeichnet, daß die spezifischen Motive (18) der ersten ($\rho_a$) der Reihen eine vorbestimmte Versetzung relativ zu jeder der gekrümmten Achsen (3) aufweisen, wobei die spezifischen Motive (18) der zweiten ($\rho_b$) der Reihen eine Versetzung aufweisen, die derjenigen der ersten Reihe entspricht und umgekehrten Vorzeichens ist.

6. Informationsträger nach Anspruch 1, dadurch gekennzeichnet, daß die radiale Anordnung der Motive (42) im Schnittpunkt mit den Achsen (3) digitale Adressen (43) definiert, welche die absoluten Positionen der Motive im reflektierten Binärkode ausdrücken.

7. Informationsträger nach Anspruch 6, dadurch gekennzeichnet, daß die digitalen Adressen sich voneinander unterscheiden, aber zahlenmäßig der Anzahl der Achsen (3) entsprechen.

8. Informationsträger nach Anspruch 1, dadurch gekennzeichnet, daß die Spurelemente paketweise gruppiert sind, wobei die durch die Radialanordnung der Motive (18) im Schnittpunkt mit den Achsen (3) definierten digitalen Adressen innerhalb eines Pakets untereinander gleich, aber von einem Paket zum benachbarten Paket verschieden sind.

9. Informationsträger nach Anspruch 8, dadurch gekennzeichnet, daß die Pakete (P') eine Gruppe (G) bilden, und daß mehrere dieser Gruppen in dem Ringbereich radial angeordnet sind, der die Spurelemente enthält.

10. Informationsträger nach Anspruch 1, dadurch gekennzeichnet, daß die Radialanordnung der Motive eine Treppenfunktion ($F_G$) darstellt, deren aufeinanderfolgende Werte, bezogen auf einen Bezugsradius ($\rho$), an die Relativposition der Ränder der Motive (18) gebunden sind, wobei diese Position in Richtung der Achsen (3) gemessen wird.

11. Informationsträger nach Anspruch 10, dadurch gekennzeichnet, daß die Treppenfunktion eine periodische Funktion ist.

12. Informationsträger nach Anspruch 10, dadurch gekennzeichnet, daß mindestens eine der Kanten mehrere vorbestimmte Positionen relativ zum Bezugsradius besetzen kann.

13. Informationsträger nach Anspruch 10, dadurch gekennzeichnet, daß mehrere nacheinander auf einer der Achsen (3) angetroffene Motive (18) benötigt werden, um den Wert der Treppenfunktion ($F_G$, $F_D$) zu definieren, die der betreffenden Achse (3) zugewiesen ist.

14. Informationsträger nach einem beliebigen der Ansprüche 1 bis 13, dadurch gekennzeichnet, daß die Motive (18) einen zentrierten Abschnitt und einen relativ zu den Achsen (3) versetzten Abschnitt aufweisen.

15. Informationsträger nach Anspruch 6, dadurch gekennzeichnet, daß die digitalen Adressen mindestens zwei Abschnitte ($F_G$, $F_D$) aufweisen, die jeweils durch die Anordnung von Motiven (18) ausgedrückt werden, welche entlang der genannten Achsen (3) aufeinanderfolgen.

16. Informationsträger nach einem beliebigen der vorhergehenden Ansprüche, dadurch gekennzeichnet, daß die Radien der zweiten, aus der ersten Schar hervorgegangenen Schar unter gleichen Winkelabständen angeordnet sind.

17. Informationsträger nach Anspruch 16, dadurch gekennzeichnet, daß die beiden Scharen die gleiche Anzahl an Radien aufweisen.

18. Optische Abtasteinrichtung mit getastetem Zugriff, zum Betreiben eines Informationsträgers (1) gemäß Anspruch 1, wobei die Einrichtung einen optischen Kopf (8) besitzt, der auf die Bezugsoberfläche (2) einen fokussierten Abtastfleck (7) projiziert, der sich entlang einer Bahn (16) bewegen kann, die die Spurelemente (17, 18) unter der Kontrolle eines Zugriffsmotors (9) überqueren kann, wobei der optische Kopf Fotodetektormitteln (30) zum Empfangen eines Strahlenanteils zugeordnet sind, welcher von dem durch den Fleck beleuchteten Oberflächenabschnitt (2) ausgeht, wobei die Einrichtung Steuermittel (10) zum Steuern des Zugriffsmotors aufweist, welche die Bestimmungsadresse des vorzunehmenden Zugriffs und die von den Photodetektormitteln gelieferten elektrischen Signale empfangen, dadurch gekennzeichnet, daß die Steuermittel Abtastmittel (26) aufweisen, die bei jedem Zusammentreffen des Flecks mit den mit der Abstufung versehenen Radien mindestens einen Digitalwert ($\phi$) erfassen, der zur radialen Positionierung des Flecks dient, wenn seine Bewegung nacheinander mehrere Spurelemente überdeckt, wobei der Digitalwert mindestens den Rest der Teilung einer für die Radialposition des Flecks charakteristischen Absolutgröße ($\Phi$) durch eine für die Abstufung charakteristische Zahl bildet.

19. Optische Abtasteinrichtung nach Anspruch 18, dadurch gekennzeichnet, daß der Digitalwert ($\phi$) mit der Absolutgröße ($\Phi$) zusammenfällt und somit die charakteristische Zahl Eins ist.

20. Optische Abtasteinrichtung nach Anspruch 18, dadurch gekennzeichnet, daß die charakteristische Zahl, wenn sie nicht Eins ist, einen Teilungsabstand der Abstufung darstellt.

21. Optische Abtasteinrichtung nach Anspruch 20, dadurch gekennzeichnet, daß der Teilungsabstand derjenige der Spurelemente ist.

22. Optische Abtasteinrichtung nach Anspruch 20, dadurch gekennzeichnet, daß der Teilungsabstand auf mehrere benachbarte Spurelemente (17) erweitert ist.

23. Optische Abtasteinrichtung nach Anspruch 18, dadurch gekennzeichnet, daß die Abtastmittel Mittel zum Erfassen eines von den genannten elektrischen Signalen stammenden Abtastprobenpaars (a, b), Mittel (29) zum Steuern des Erfassens, die von der Abtastung der genannten Synchronisierungsmotive synchronisiert werden, Mittel zum Digitalisieren der Abtastproben dieses Paars und Mittel (32) zum Bestimmen des Digitalwerts aus dem Abtastprobenpaar aufweist.

24. Optische Abtasteinrichtung nach Anspruch 23, dadurch gekennzeichnet, daß der Digitalwert der Winkel eines Vektors ist, dessen Komponenten aus dem Abtastprobenpaar bestehen.

25. Optische Abtasteinrichtung nach Anspruch 18, dadurch gekennzeichnet, daß die Abtastmittel Mittel zum Erfassen eines Abschnitts der elektrischen Signale, welche die Übergänge einschließen, die dem Zusammentreffen der Kanten der spezifischen Motive (18) mit dem Abtastfleck (3) entsprechen, Mittel zum Steuern der Erfassung, die von der Abtastung der Synchronisierungsmotive synchronisiert werden, Zählmittel, die von den Steuermitteln initialisiert werden, und Mittel zur Erfassung des Digitalwerts gleichzeitig mit mindestens einem der Übergänge und ausgehend von der von den Zählmitteln gelieferten Anzeige aufweisen.

26. Optische Abtastvorrichtung nach Anspruch 18, dadurch gekennzeichnet, daß mehrere der Übergänge Digitalwerte liefern, die für das Zusammentreffen der Vorder- und Hinterkanten der spezifischen Motive (18) charakteristisch sind.

27. Optische Abtastvorrichtung nach Anspruch 18, dadurch gekennzeichnet, daß die Abtastmittel Mittel (44, 45, 46) zum Erfassen der Tastproben aufweisen, die zur Darstellung des Digitalwerts aus einem im reflektierten Binärkode abgefaßten Erfassungsbefehls bestimmt und durch die Abtastung der Synchronisierungsmotive synchronisiert werden.

28. Optische Abtastvorrichtung nach Anspruch 27, dadurch gekennzeichnet, daß die Digitalwert aus dem Interpretation mindestens eines Abschnitts (43) der Adresse hervorgeht.

29. Optische Abtastvorrichtung nach Anspruch 27, dadurch gekennzeichnet, daß Abschnitte der Adresse an nichtbenachbarten Plätzen entlang der genannten Achsen erfaßt werden.

30. Optische Abtastvorrichtung nach Anspruch 29, dadurch gekennzeichnet, daß bestimmte Abschnitte häufiger als andere Abschnitte erfaßt werden.

31. Optische Abtastvorrichtung nach Anspruch 18, dadurch gekennzeichnet, daß die Abtastmittel Mittel zum Erfassen des Digitalwerts aufweisen, die auf der Basis des Zusammentreffens der spezifische Motive mit dem Abtastfleck arbeiten, wobei das Zusammentreffen in Zeitpunkten der Abtastung erfolgt, die vorbestimmte Versetzungen relativ zu dem Synchronisierungsimpuls aufweisen, der als Antwort auf die Abastung der Synchronisierungsmotive erzeugt wird.

32. Abtasteinrichtung nach einem beliebigen der Ansprüche 18 bis 31, dadurch gekennzeichnet, daß sie Mittel (32) zur Verarbeitung des Digitalwerts ($\phi$) aufweist, die es ermöglichen, durch Linearextrapolation und unter Berücksichtigung mindestens eines früher erfaßten Digitalwerts einen neuen Wert der Absolutgröße ($\Phi$) in Kenntnis ihres vorherigen Werts zu validieren.

33. Abtasteinrichtung nach einem beliebigen der Ansprüche 18 bis 32, dadurch gekennzeichnet, daß die Abtastmittel Tastproben liefern, die für die Steuerung der Spurverfolgung (31) nutzbar sind.

34. Abtasteinrichtung nach einem beliebigen der Ansprüche 18 bis 33, dadurch gekennzeichnet, daß die Abtastmittel Übergänge ($T_G$) liefern, die für die Identifizierung der Synchronisierungsmotive nutzbar sind.

35. Zugriffsverfahren im Abtastmodus, zum Abtasten einer Spur eines Informationsträgers (1) nach Anspruch 1, gekennzeichnet durch folgende Schritte:
    - Überstreichen der Bezugsoberfläche (2) mit einem fokussierten Leseleuchtfleck in Richtung quer zu den Spuren,
    - Bestimmen der Amplitude und des Vorzeichens der radialen Verschiebung des Flecks innerhalb eines Satzes von benachbarten Spurelementen, wenn der Fleck optisch und wiederholt mit der Stufenleiter der Abstufung in Wechselbeziehung tritt, und
    - Bestimmen der Momentanposition des Flecks relativ zur Stufenleiter der Abstufung, wenn der Fleck die Radialanordnung überstreicht, wobei die Bestimmungen zur Berechnung der Position des Flecks benutzt werden, um auf eine gegebene Spur zuzugreifen.

36. Verfahren nach Anspruch 35, dadurch gekennzeichnet, daß die Stufenleiter der Abstufung so angelegt ist, daß bei der radialen Abtastung der Radialanordnung zwei periodische Funktionen gleicher Periodizität hervorgebracht werden, die untereinander eine signifikante Phasenverschiebung aufweisen.

37. Verfahren nach Anspruch 36, dadurch gekennzeichnet, daß die Bestimmung der Absolutposition des Flecks entlang eines Radius durch Benutzung zweier bekannter Positionen erfolgt, um die Verschiebungsgeschwindigkeit des Flecks zu ermitteln und die Absolutposition linear zu extrapolieren.

38. Verfahren nach Anspruch 35, dadurch gekennzeichnet, daß die Stufenleiter der Abstufung eine Stufenleiter ist, die bei der Abtastung durch den Lesefleck eine Absolutadresse liefert.

39. Verfahren nach Anspruch 38, dadurch gekennzeichnet, daß die vollständige Absolutadresse durch Lesen mehrerer Plätze erhalten wird, in denen die Teiladressen stehen.

FIG.1

EP 0 225 259 B1

# FIG.2

# FIG.3

# FIG.4

# FIG.5

EP 0 225 259 B1

# FIG.6

# FIG.7

# FIG.8

# FIG.13

# FIG.9

FIG.10

```
        ┌──────────┐
        │  DEBUT   │
        └──────────┘
             │
             ▼
        ╱─────────╲
        │ aᵢ ; bᵢ │
        ╲─────────╱
             │
             ▼
   ┌────────────────────┐
   │  a = aᵢ ;  b = bᵢ  │
   │  φ = arc tg  b/a   │
   └────────────────────┘
             │
             ▼
```

$$\Delta V = \varphi - \varphi_{-1} + 2 \ast k \ast \pi - V$$

$$-\pi \leqslant \Delta V \leqslant +\pi$$

$$V = V + \Delta V$$
$$N = N + k$$
$$\varphi_{-1} = \varphi$$

$$\Delta V > 0$$

$$k = k - 1 \qquad k = k + 1$$

FIN

| N | k | φ − 1 | a |
|---|---|-------|---|

k → 0

| V | ΔV | φ | b |
|---|----|---|---|

V → 0

FIG.11

FIG.12

FIG.14

# FIG.15

# FIG.16

# FIG.17

FIG.18

38

FIG.19

FIG.20

EP 0 225 259 B1